# EUROPEAN PATENT SPECIFICATION

(11) **EP 3 954 266 B1**
(45) Date of publication and mention of the grant of the patent: **07.05.2025**
(21) Application number: 20787937.0
(22) Date of filing: 08.04.2020
(51) Int. Cl.: A47L 11/24

(54) **CLEANING CONTROL METHOD AND APPARATUS, CLEANING ROBOT AND STORAGE MEDIUM**
REINIGUNGSSTEUERUNGSVERFAHREN UND VORRICHTUNG, REINIGUNGSROBOTER UND SPEICHERMEDIUM
PROCÉDÉ ET APPAREIL DE COMMANDE DE NETTOYAGE, ROBOT DE NETTOYAGE ET SUPPORT DE STOCKAGE

(30) Priority: 11.04.2019 CN 201910288358
(43) Date of publication of application: 16.02.2022
(73) Proprietor: Yunjing Intelligence Technology (Dongguan) Co., Ltd., Dongguan, Guangdong 523808 (CN)
(72) Inventor: WU, Yihao, Guangdong 523808 (CN); ZHOU, Jingwei, Guangdong 523808 (CN)
(74) Representative: Osterhoff, Utz
(86) International application number: PCT/CN2020/083614
(87) International publication number: WO 2020/207389

(56) References cited:
- WO-A1-2017/108077
- CN-A- 104 536 447
- CN-A- 104 757 909
- CN-A- 106 527 423
- CN-A- 107 666 846
- CN-A- 108 567 379
- CN-A- 108 567 379
- CN-A- 109 984 685
- US-A1- 2019 061 156

## Description

### TECHNICAL FIELD

The present invention relates to the technical field of smart devices, in particular to a cleaning control method, a cleaning control device, a cleaning robot and a storage medium.

### BACKGROUND

With the rapid development of smart device technology, cleaning robots with automatic cleaning functions are becoming increasingly popular, and with the acceleration of people's lives, the role of cleaning robots in family life is becoming increasingly important. The cleaning robot can automatically perform a cleaning operation in a space to be cleaned such as a home space or a large place, thereby saving a lot of cleaning time for the user.

Taking the space to be cleaned being a home space as an example, when a cleaning robot cleans the home space, the cleaning robot divides the home space into a plurality of cleaning areas of a same size, with each cleaning area being a square or a rectangle. The cleaning robot sequentially performs cleaning operations on the plurality of cleaning areas in unit of a cleaning area. For each cleaning area, the cleaning robot takes a sidewinding path in the cleaning area to perform cleaning operations on the ground. When power of the cleaning robot is insufficient or a cleaning component of the cleaning robot needs to be cleaned, the cleaning robot will move through an entrance/exit to an area where a base station of the cleaning robot is located for charging or cleaning, and then return to the cleaning area being cleaned to continue the cleaning operation.

On condition that the cleaning robot has cleaned an entrance/exit, when repeatedly moving through the entrance/exit to the area where the base station is located for charging or cleaning, it is prone for the cleaning robot to contaminate the cleaned entrance/exit, resulting in poor cleaning effect and low cleaning efficiency.

CN 108567379A relates to the technical field of cleaning devices and provides a self-propelled cleaning method. The cleaning method comprises: providing an indoor space provided with an obstacle; and providing a self-propelled cleaning device provided with a map establishing unit, wherein the map establishing unit plans a virtual map with a plurality of virtual partitions according to the position of the self-propelled cleaning device in the indoor space; allowing the self-propelled cleaning device to sequentially execute a determined area range step in the plurality of virtual partitions, and taking a space defined by a known boundary as an area range; and allowing the self-propelled cleaning device to execute a cleaning area range step in the area range, and cleaning the area range along a default walking path.

CN 104536447A relates to the technical field of sweeping robots and provides a navigation method for a sweeping robot. The navigation method comprises the following steps that firstly, an XOY coordinate system is set up for an area to be swept; secondly, the area to be swept is swept by the sweeping robot, the distance from the sweeping robot to front obstacles is measured in real time through an ultrasonic wave by the sweeping robot to decide the locations of the obstacles, meanwhile, the moving trajectory coordinates of the sweeping robot are recorded by the sweeping robot and sent to a PC terminal through an emitter; thirdly, a sweeping robot moving trajectory plan is generated from the moving trajectory coordinates of the sweeping robot by the PC terminal; fourthly, sweeping work is conducted by the sweeping robot according to the sweeping robot moving trajectory plan generated in the third step.

US 2019/061156A1 relates to the technical field of cleaning robots and provides a method of planning a cleaning route for a cleaning robot: firstly, starting from an original point based on maps of grids, cleaning grid zones formed by the grids one by one until an entire region is cleaned, and then establishing a map of the entire region; secondly, searching the map of the entire region to find out uncleaned areas missed from cleaning, and then cleaning the uncleaned areas; thirdly, cleaning peripheral areas of the entire region based on the map of the entire region; and lastly, returning to the original point. A chip is also provided which stores procedures for controlling the cleaning robot to implement the method of planning a cleaning route.

### SUMMARY

The embodiments of the present invention provide a cleaning control method, a cleaning control device, a cleaning robot, and a storage medium, which can solve the problem that the cleaning robot passes through a cleaned entrance/exit during the cleaning operation and pollutes the cleaned entrance/exit. The technical solution is as follows.

In one aspect, a cleaning control method is provided, applied to be executed by a cleaning robot when cleans an unknown area to be cleaned, where the cleaning robot is used in conjunction with a base station, the base station is a cleaning device used by the cleaning robot, the area to be cleaned includes an entrance edge, the cleaning robot is configured to perform a cleaning operation according to a set cleaning direction, and the set cleaning direction is a direction pointing from inside of the area to be cleaned to the entrance edge, and the cleaning control method includes:
operation S1, acquiring an area map, where the area map is configured to represent the area to be cleaned or a sub-area to be cleaned in the area to be cleaned, and the sub-area to be cleaned is an uncleaned area in the area to be cleaned;
operation S2, determining a first cleaning starting point of the area to be cleaned or the sub-area to be cleaned based on the area map, where the first cleaning starting point is a point on an edge of the area to be cleaned or the sub-area to be cleaned opposite to the cleaning direction; and
operation S3, performing a cleaning operation on the area to be cleaned or the sub-area to be cleaned from the first cleaning starting point after moving to the first cleaning starting point.

In another aspect, a cleaning control device is provided, applied to be executed by a cleaning robot when cleans an unknown area to be cleaned, where the cleaning robot is used in conjunction with a base station, the base station is a cleaning device used by the cleaning robot, the area to be cleaned includes an entrance edge, the cleaning robot is configured to perform a cleaning operation according to a set cleaning direction, and the set cleaning direction is a direction pointing from inside of the area to be cleaned to the entrance edge, and the cleaning control device includes:
an acquisition module for acquiring an area map, where the area map is configured for representing the area to be cleaned or a sub-area to be cleaned in the area to be cleaned, wherein the sub-area to be cleaned is an uncleaned area in the area to be cleaned;
a determination module for determining a first cleaning starting point of the area to be cleaned or the sub-area to be cleaned based on the area map, where the first cleaning starting point is a point on an edge of the area to be cleaned or the sub-area to be cleaned opposite to the cleaning direction;
a cleaning module for performing a cleaning operation on the area to be cleaned or the sub-area to be cleaned from the first cleaning starting point.

In still another aspect, a cleaning robot is provided, and the cleaning robot includes:
a processor and a memory in which at least one instruction, at least one program, a code set, or an instruction set is stored, the instruction, the program, the code set, or the instruction set being loadable and executable by the processor to implement the operations performed in the foregoing cleaning control method of the first aspect.

In a further aspect, a computer-readable storage medium is provided, the computer readable storage medium stores at least one instruction, at least one program, a code set or an instruction set, the instruction, the program, the code set or the instruction set is loadable and executable by the processor to implement the operations performed in the foregoing cleaning control method of the first aspect.

The beneficial effects brought about by the technical solutions provided by the embodiments of the present invention are as follows.

In embodiments of the present invention, when the cleaning robot cleans the area to be cleaned or the sub-area to be cleaned, the cleaning robot determines a first cleaning starting point of the area to be cleaned or sub-area to be cleaned. The first cleaning starting point is a point on an edge of the area to be cleaned or sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### BRIEF DESCRIPTION OF THE DRAWINGS

Fig. 1 is a schematic diagram of an application scenario of a cleaning control method according to an embodiment of the present invention.
Fig. 2 is a perspective schematic diagram of a cleaning robot according to an embodiment of the present invention.
Fig. 3 is a schematic structural diagram of the cleaning robot according to an embodiment of the present invention with a part of a housing being removed.
Fig. 4 is a bottom view of a mopping robot according to an embodiment of the present invention.
Fig. 5 is a bottom view of a sweeping robot according to an embodiment of the present invention.
Fig. 6 is a structural block diagram of the cleaning robot according to an embodiment of the present invention.
Fig. 7 is a front view of a base station according to an embodiment of the present invention.
Fig. 8 is a perspective schematic diagram of the base station according to an embodiment of the present invention with a top cover being opened.
Fig. 9 is a structural block diagram of the base station according to an embodiment of the present invention.
Fig. 10 is a schematic diagram of the cleaning robot driving toward the base station according to an embodiment of the present invention.
Fig. 11 is a schematic diagram of a state in which the cleaning robot is parked on the base station according to an embodiment of the present invention.
Fig. 12 is a flowchart of a cleaning control method according to an embodiment of the present invention.
Fig. 13 is a schematic diagram showing a cleaning operation on a floor according to an embodiment of the present invention.
Fig. 14 is a flowchart of another cleaning control method according to an embodiment of the present invention.
Fig. 15 is a schematic diagram showing another cleaning operation on the floor according to an embodiment of the present invention.
Fig. 16 is a flowchart of another cleaning control method according to an embodiment of the present invention.
Fig. 17 is a schematic diagram showing another cleaning operation on the floor according to an embodiment of the present invention.
Fig. 18 is a flowchart of another cleaning control method according to an embodiment of the present invention.
Fig. 19 is a schematic diagram showing another cleaning operation on the floor according to an embodiment of the present invention.
Fig. 20 is a flowchart of another cleaning control method according to an embodiment of the present invention.
Fig. 21 is a schematic diagram showing another cleaning operation on the floor according to an embodiment of the present invention.
Fig. 22 is a flowchart of another cleaning control method according to an embodiment of the present invention.
Fig. 23 is a schematic diagram showing another cleaning operation on the floor according to an embodiment of the present invention.
Fig. 24 is a flowchart of another cleaning control method according to an embodiment of the present invention.
Fig. 25 is a schematic diagram showing another cleaning operation on the floor according to an embodiment of the present invention.
Fig. 26 is a flowchart of another cleaning control method according to an embodiment of the present invention.
Fig. 27 is a schematic diagram showing another cleaning operation on the floor according to an embodiment of the present invention.
Fig. 28 is a flowchart of another cleaning control method according to an embodiment of the present invention.
Fig. 29 is a schematic diagram showing another cleaning operation on the floor according to an embodiment of the present invention.
Fig. 30 is a schematic diagram showing another cleaning operation on the floor according to an embodiment of the present invention.
Fig. 31 is a schematic diagram showing another cleaning operation on the floor according to an embodiment of the present invention.
Fig. 32 is a flowchart of another cleaning control method according to an embodiment of the present invention.
Fig. 33 is a schematic diagram showing another cleaning operation on the floor according to an embodiment of the present invention.
Fig. 34 is a flowchart of another cleaning control method according to an embodiment of the present invention.
Fig. 35 is a schematic diagram showing another cleaning operation on the floor according to an embodiment of the present invention.
Fig. 36 is a flowchart of another cleaning control method according to an embodiment of the present invention.
Fig. 37 is a schematic diagram showing another cleaning operation on the floor according to an embodiment of the present invention.
Fig. 38 is a flowchart of another cleaning control method according to an embodiment of the present invention.
Fig. 39 is a schematic diagram showing another cleaning operation on the floor according to an embodiment of the present invention.
Fig. 40 is a flowchart of another cleaning control method according to an embodiment of the present invention.
Fig. 41 is a schematic diagram showing another cleaning operation on the floor according to an embodiment of the present invention.
Fig. 42 is a flowchart of another cleaning control method according to an embodiment of the present invention.
Fig. 43 is a schematic diagram showing another cleaning operation on the floor according to an embodiment of the present invention.
Fig. 44 is a flowchart of another cleaning control method according to an embodiment of the present invention.
Fig. 45 is a schematic diagram showing another cleaning operation on the floor according to an embodiment of the present invention.
Fig. 46 is a structural diagram of a clean control device according to an embodiment of the present invention.

### DETAILED DESCRIPTION OF THE EMBODIMENTS

In order to make the technical solutions and advantages of the present invention clearer, the embodiments of the present invention are described in further detail below.

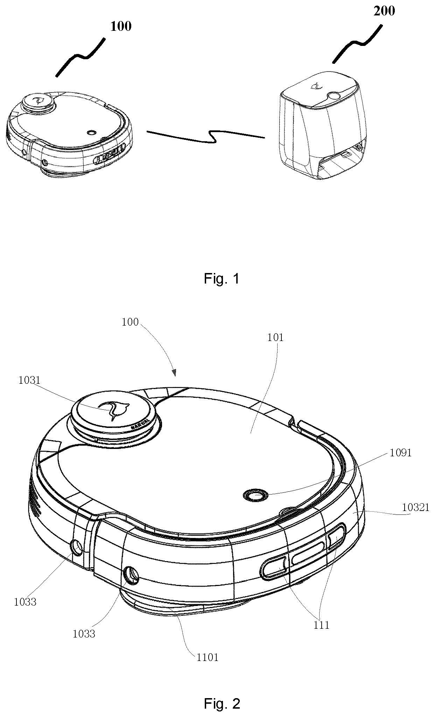

The embodiments of the present invention provide an application scenario of a cleaning control method. Referring to Fig. 1, the application scenario includes a cleaning robot 100 and a base station 200. The cleaning robot 100 is configured to automatically clean a floor of an area to be cleaned. The base station 200 is a cleaning device used in conjunction with the cleaning robot 100 to charge the cleaning robot 100 or to clean a cleaning component of the cleaning robot 100. The cleaning robot 100 is provided with the cleaning component and a driving device. The driving device is configured to drive the cleaning robot 100 and can be a driving wheel. The cleaning component is configured to automatically clean the floor of the area to be cleaned. The cleaning component may be a mopping module or a sweeping module. The mopping module is configured for mopping and cleaning the floor. The mopping module may be a mopping component, and the mopping component may be a rag. The sweeping module is configured for sweeping and cleaning the floor, and the sweeping module may be a side brush. The area to be cleaned may be a home area, a room in a home area, a partial area of a room, or a room area composed of a plurality of rooms. The area to be cleaned may also be an office room in an office building, a large place, a partial area of a large place or a public place such as an airport. In the embodiments of the present invention, the area to be cleaned is not specifically limited.

The area to be cleaned is provided with an entrance/exit for the cleaning robot 100 to enter and exit the area to be cleaned. When the cleaning robot 100 cleans the area to be cleaned, it can enter and exit the area to be cleaned through the entrance/exit, or when the cleaning robot needs to go to the base station 200 for charging or cleaning the cleaning component, it can enter and exit the area to be cleaned through the entrance/exit. When the area to be cleaned is a home area, the entrance/exit may be a door of the home area. When the area to be cleaned is a room of a home area, the entrance/exit may be a door of the room. In the embodiment of the present invention, an edge where the entrance/exit of the area to be cleaned locates can be referred to as an entrance edge, the entrance edge is an edge of the area to be cleaned for the cleaning robot 100 to enter and exit the area to be cleaned. The cleaning robot 100 performs a cleaning operation according to a set cleaning direction. The cleaning direction is a direction from inside of the area to be cleaned to the entrance edge.

In the embodiment of the present invention, when the cleaning robot 100 cleans the area to be clean, it determines a first cleaning starting point of the area to be cleaned, the first cleaning starting point being a point on an edge of the area to be cleaned opposite to the cleaning direction, and the cleaning direction being a direction from the inside of the area to be cleaned to the entrance edge, and performs a cleaning operation on the area to be cleaned from the first cleaning starting point. Therefore, cleaning from an inner end of the area to be cleaned to the entrance edge is realized, the cleaned floor is prevented from being polluted by dirty cleaning components, and the cleaning efficiency is improved.

The embodiments of the present invention provide a cleaning robot 100 which can be used to automatically clean the floor.

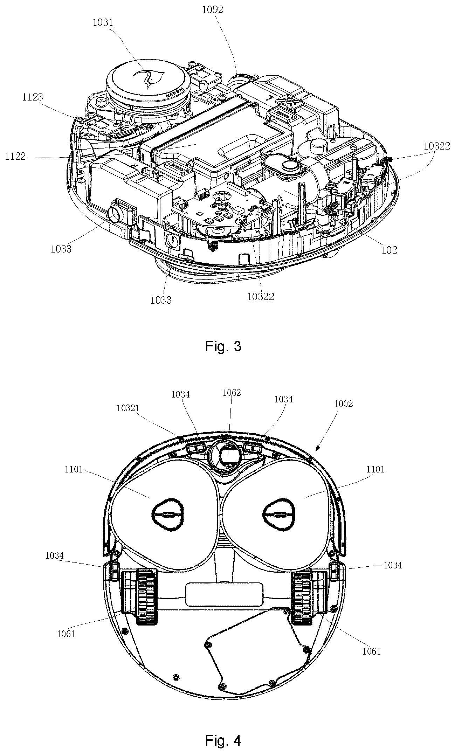

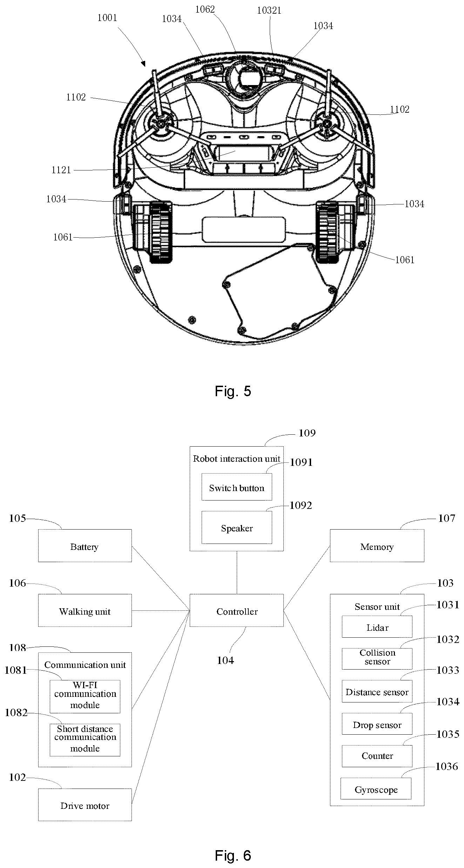

Fig. 2 is a perspective schematic diagram of the cleaning robot 100 according to an embodiment of the present invention. Fig. 3 is a schematic structural diagram of the cleaning robot 100 with a part of a housing being removed. Fig. 4 is a bottom view of a mopping robot according to an embodiment of the present invention. Fig. 5 is a bottom view of another sweeping robot according to an embodiment of the present invention. Fig. 6 is a structural block diagram of the cleaning robot according to an embodiment of the present invention. The cleaning robot 100 includes a sweeping robot 1001 and a mopping robot 1002.

As shown in Figs. 2 to 6, the cleaning robot 100 includes a robot body 101, a drive motor 102, a sensor unit 103, a controller 104, a battery 105, a walking unit 106, a memory 107, a communication unit 108, a robot interaction unit 109, a cleaning component, a charging component 111 and so on.

The robot body 101 may have a circular structure, a square structure, or the like. In the embodiments of the present invention, taking the robot body 101 having a D-shaped structure as an example for description. As shown in Fig. 2, a front part of the robot body 101 is a rectangular structure with rounded corners, and a rear part is a semicircular structure. In the embodiments of the present invention, the robot body 101 has a left-right symmetric structure.

The cleaning component is configured to clean the floor, and a number of cleaning component may be one or more. The cleaning component is arranged at a bottom of the robot body 101, specifically at a front position of the bottom of the robot body 101. A drive motor 102 is provided inside the robot body 101, two rotating shafts extend from the bottom of the robot body 101, and the cleaning component is sleeved on the rotating shafts. The drive motor 102 can drive the rotating shafts to rotate, so that the rotating shafts drive the cleaning component to rotate.

As shown in Fig. 4, for the mopping robot 1002, the cleaning component is specifically a mopping component 1101, and the mopping component 1101 is, for example, a mop. The mopping component 1101 is configured for mopping and cleaning the floor.

As shown in Fig. 5, for the cleaning robot 1001, the cleaning component is specifically a side brush 1102, and the side brush 1102 is configured for sweeping and cleaning the floor. The cleaning robot 1001 is further provided with a dust suction device, which includes a dust suction port 1121 provided at the bottom of the robot body 101 and a dust box 1122 and a fan 1123 provided inside the robot body 101. The side brush 1102 is arranged on the rotating shafts at the bottom of the sweeping robot 1001. After the rotating shafts drive the side brush 1102, the rotating side brush 1102 sweeps garbage such as dust to the dust suction port 1121 at the bottom of the sweeping robot 1001. Due to the suction effect of the fan 1123, the garbage is sucked into the dust suction port 1121 and enters the dust box 1122 through the dust suction port 1121 for temporary storage.

In the embodiments of the present invention, the cleaning component of the cleaning robot 100 may be set in a detachable connection mode. When mopping cleaning is required, the mopping component 1101 is installed on the bottom of the robot body 101; and when sweeping cleaning is required, the side brush 1102 is configured to replace the mopping component 1101, and the side brush 1102 is installed on the bottom of the robot body 101.

The walking unit 106 is a component related to the movement of the cleaning robot 100, and the walking unit 106 includes a driving wheel 1061 and a universal wheel 1062. The universal wheel 1062 and the driving wheel 1061 cooperate to realize steering and movement of the cleaning robot 100. A driving wheel 1061 is respectively provided on left and right sides at a position near the rear part of a bottom surface of the robot body 101. The universal wheel 1062 is arranged on a center line of the bottom surface of the robot body 101 and is located between the two cleaning components.

Each driving wheel 1061 is provided with a driving wheel motor and rotates when driven by the driving wheel motor. The driving wheel 1061 rotates to drive the cleaning robot 100 to move. By controlling a difference in rotation speed of left and right driving wheels 1061, a steering angle of the cleaning robot 100 can be controlled.

Fig. 6 is another structural schematic diagram of the cleaning robot 100 shown in Fig. 2.

The controller 104 is provided inside the robot body 101, and the controller 104 is configured to control the cleaning robot 100 to perform specific operations. The controller 104 may be, for example, a Central Processing Unit (CPU), or a microprocessor. As shown in Fig. 6, the controller 104 is electrically connected with components such as the battery 105, the memory 107, the drive motor 102, the walking unit 106, the sensor unit 103, and the robot interaction unit 109 to control these components.

The battery 105 is provided inside the robot body 101, and the battery 105 is configured to provide power to the cleaning robot 100.

The robot body 101 is further provided with a charging component 111, which is configured to obtain power from an external device to charge the battery 105 of the cleaning robot 100.

The memory 107 is arranged on the robot body 101, and a program is stored on the memory 107, and the program is executed by the controller 104 to realize corresponding operations. The memory 107 is further configured to store parameters used by the cleaning robot 100. The memory 107 includes, but is not limited to, a magnetic disk memory, a Compact Disc Read-Only Memory (CD-ROM), an optical memory, and the like.

The communication unit 108 is arranged on the robot body 101. The communication unit 108 is configured to allow the cleaning robot 100 to communicate with external devices. The communication unit 108 includes but is not limited to a Wireless-Fidelity (WI-FI) communication module 1081 and a short distance communication module 1082 and so on. The cleaning robot 100 can be connected to a WI-FI router through the WI-FI communication module 1081 to communicate with a terminal. The cleaning robot 100 communicates with the base station through the short-range communication module 1082. The base station is a cleaning device that cooperates with the cleaning robot 100.

The sensor unit 103 provided on the robot body 101 includes various types of sensors, such as a lidar 1031, a collision sensor 1032, a distance sensor 1033, a drop sensor 1034, a counter 1035, and a gyroscope 1036.

The lidar 1031 is set on a top of the robot body 101. When working, the lidar 1031 rotates and emits a laser signal through a transmitter on the lidar 1031. The laser signal is reflected by the obstacle, so that a receiver of the lidar 1031 receives the laser signal reflected by the obstacle. A circuit unit of the lidar 1031 can obtain surrounding environment information by analyzing the received laser signal, such as a distance and an angle of the obstacle relative to the lidar 1031. In addition, a camera may also be configured instead of lidar, and the distance and angle of the obstacle relative to the camera can also be obtained by analyzing the obstacle in an image taken by the camera.

The collision sensor 1032 includes a collision housing 10321 and a trigger sensor 10322. The collision housing 10321 surrounds a head of the robot body 101. Specifically, the collision housing 10321 is provided at the head of the robot body 101 and front positions of left and right sides of the robot body 101. The trigger sensor 10322 is arranged inside the robot body 101 and behind the collision housing 10321. An elastic buffer is provided between the collision housing 10321 and the robot body 101. When the cleaning robot 100 collides with an obstacle through the collision housing 10321, the collision housing 10321 moves towards the inside of the cleaning robot 100 and compresses the elastic buffer. After the collision housing 10321 moves a certain distance towards the inside of the cleaning robot 100, the collision housing 10321 contacts the trigger sensor 10322, and the trigger sensor 10322 is triggered to generate a signal, which can be sent to the controller 104 inside the robot body 101 for processing. After colliding the obstacle, the cleaning robot 100 moves away from the obstacle, and the collision housing 10321 moves back to the original position under the action of the elastic buffer. It can be seen that the collision sensor 1032 can detect the obstacle and play a buffering role when it collides with the obstacle.

The distance sensor 1033 may specifically be an infrared detection sensor, which may be configured to detect a distance from the obstacle to the distance sensor 1033. The distance sensor 1033 is arranged on a lateral side of the robot body 101, so that a distance from the obstacle located near the lateral side of the cleaning robot 100 to the distance sensor 1033 can be measured by the distance sensor 1033. The distance sensor 1033 may also be an ultrasonic distance measuring sensor, a laser distance measuring sensor or a depth sensor.

The drop sensor 1034 is provided on a bottom edge of the robot body 101, and a number can be one or more. When the cleaning robot 100 moves to an edge of the floor, the drop sensor 1034 can detect that the cleaning robot 100 is at risk of falling from a height, so as to perform a corresponding anti-drop response, for example, the cleaning robot 100 stops moving or moves away from the falling position and so on.

The counter 1035 and the gyroscope 1036 are further provided inside the robot body 101. The counter 1035 is configured to accumulate a total rotation angle of the driving wheel 1061 to calculate a distance the driving wheel 1061 drives the cleaning robot 100 to move. The gyroscope 1036 is configured to detect the rotation angle of the cleaning robot 100, so that an orientation of the cleaning robot 100 can be determined.

The robot interaction unit 109 is disposed on the robot body 101, and the user can interact with the cleaning robot 100 through the robot interaction unit 109. The robot interaction unit 109 includes components such as a switch button 1091 and a speaker 1092. The user can control the cleaning robot 100 to start or stop working by pressing the switch button 1091. The cleaning robot 100 may play a prompt sound to the user through the speaker 1092.

It should be understood that the cleaning robot 100 described in the embodiments of the present invention is only a specific example, and does not specifically limit the cleaning robot 100 in the embodiments of the present invention. The cleaning robot 100 in the embodiments of the present invention may also be other specific implementations. For example, in other implementations, the cleaning robot may have more or fewer components than the cleaning robot 100 shown in Fig. 2. For another example, the cleaning robot may be an integrated sweeping and mopping robot, that is, the bottom of the cleaning robot is provided with a mopping component, a side brush, and a suction port, so that the cleaning robot can simultaneously mopping and sweeping the floor.

The embodiments of the present invention further provide a base station 200, which is used in conjunction with the cleaning robot 100. For example, the base station 200 can charge the cleaning robot 100, and provide a parking position for the cleaning robot 100. When the cleaning robot 100 is the mopping robot, the base station 200 can also clean the mopping component 1101 of the mopping robot. The mopping component 1101 is configured for mopping and cleaning the floor.

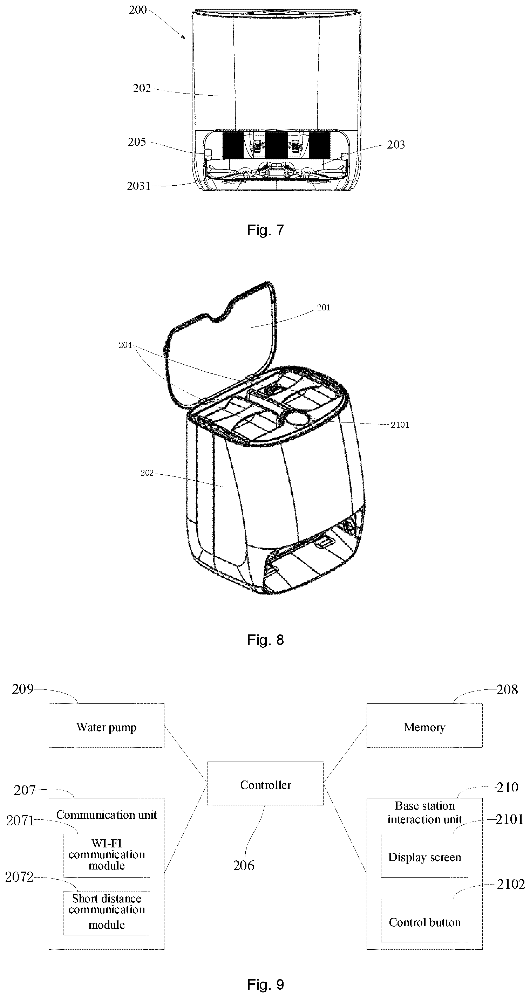

Fig. 7 is a front view of a base station 200 according to an embodiment of the present invention. Fig. 8 is a perspective schematic diagram of the base station 200 shown in Fig. 7 with a top cover 201 being opened.

As shown in Fig. 7 and Fig. 8, the base station 200 in the embodiments of the present invention includes a base station body 202, a cleaning tank 203 and a water tank 204.

The cleaning tank 203 is provided on the base station body 202 and configured for cleaning the mopping component 1101 of the mopping robot. A cleaning rib 2031 provided in the cleaning tank 203 can scrape and clean the mopping component 1101.

An entry port 205 is provided on the base station body 202, and the entry port 205 leads to the cleaning tank 203. The cleaning robot 100 can drive into the base station 200 through the entry port 205 so that the cleaning robot 100 is parked at a preset parking position on the base station 200.

The water tank 204 is arranged inside the base station body 202, and the water tank 204 specifically includes a clean water tank and a dirty water tank. The clean water tank is configured to store clean water. When the cleaning robot 100 is a mopping robot and the mopping robot is provided with a mopping component 1101 at the bottom, the cleaning robot 100 is parked on the base station 200 and the mopping component 1101 of the cleaning robot 100 is accommodated in the cleaning tank 203. The clean water tank provides cleaning water to the cleaning tank 203, and the cleaning water is used to clean the mopping component 1101. Then, the dirty water after cleaning the mopping component 1101 is collected in the dirty water tank. A top cover 201 is provided on the base station body 202, and the user can take out the water tank 204 from the base station body 202 by opening the top cover 201.

Fig. 9 is another schematic structural diagram of the base station 200 shown in Fig. 7.

Referring to Fig. 9, the base station 200 according to the embodiments of the present invention further includes a controller 206, a communication unit 207, a memory 208, a water pump 209, a base station interaction unit 210, and the like.

The controller 206 is arranged inside the base station body 202 and configured to control the base station 200 to perform specific operations. The controller 206 may be, for example, a Central Processing Unit (CPU), or a microprocessor. The controller 206 is electrically connected to the communication unit 207, the memory 208, the water pump 209, and the base station interaction unit 210.

The memory 208 is arranged on the base station body 202, and a program is stored on the memory 208, and the program is executed by the controller 206 to realize corresponding operations. The memory 208 is further configured to store parameters used by the base station 200. The memory 208 includes, but is not limited to, a magnetic disk memory, a CD-ROM, an optical memory, and the like.

The water pump 209 is arranged inside the base station body 202. Specifically, there are two water pumps 209. One water pump 209 is configured to control the clean water tank to provide cleaning water to the cleaning tank 203, and the other water pump 209 is configured to collect dirty water after cleaning the mopping component 1101 to the dirty water tank.

The communication unit 207 is arranged on the base station body 202. The communication unit 207 is configured to communicate with external devices. The communication unit 207 includes but is not limited to a Wireless-Fidelity (WI-FI) communication module 2071 and a short distance communication module 2072 and so on. The base station 200 can be connected to a WI-FI router through the WI-FI communication module 2071 to communicate with the terminal. The base station 200 can communicate with the cleaning robot 100 through the short-range communication module 2072.

The base station interaction unit 210 is configured to interact with the user. The base station interaction unit 210 includes, for example, a display screen 2101 and a control button 2102. The display screen 2101 and the control button 2102 are arranged on the base station body 202. The display screen 2101 is configured to display information to the user, and the control button 2102 is configured for the user to, for example, perform pressing operations to control the startup or shutdown of the base station 200, etc.

The base station body 202 is further provided with a power supply component, and the cleaning robot is provided with a charging component 111. When the cleaning robot 100 is parked at the preset parking position on the base station 200, the charging component 111 of the cleaning robot 100 is in contact with the power supply component of the base station 200, so that the base station 200 charges the cleaning robot 100. The electric energy of the base station 200 can be come from the mains.

An exemplary description of a process of the cleaning robot 100 and the base station 200 working together is given as follows.

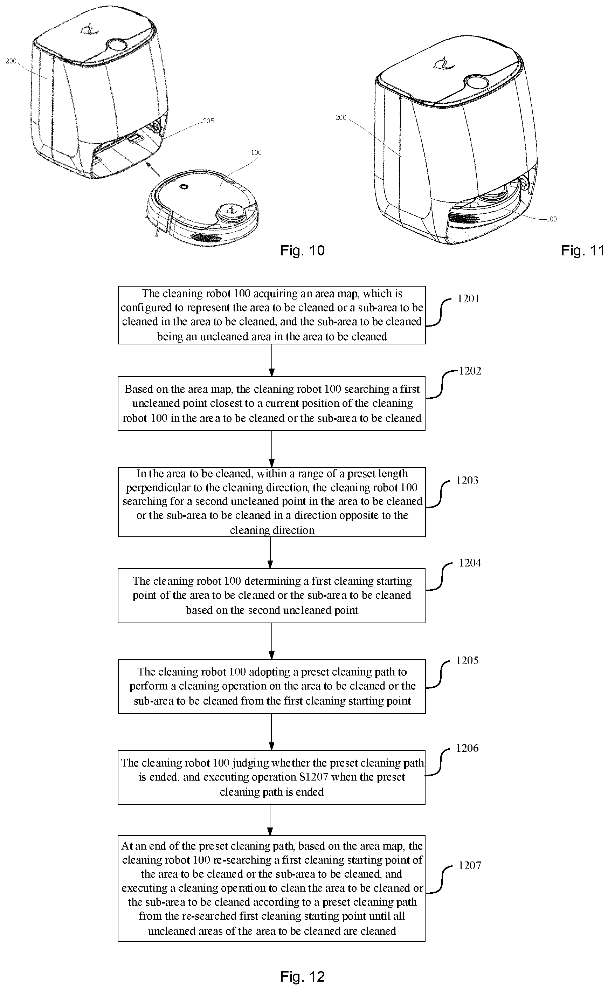

The cleaning robot 100 is used to clean the floor of the room. When the power of the battery 105 on the cleaning robot 100 is less than a preset power threshold, as shown in Fig. 10, the cleaning robot 100 automatically drives to the base station 200. The cleaning robot 100 enters the base station 200 through the entry port 205 on the base station 200 and is parked at the preset parking position on the base station 200. The state of the cleaning robot 100 parked on the base station 200 can be seen in Fig. 11.

At this time, the charging component 111 on the cleaning robot 100 is in contact with the power supply component on the base station 200, and the base station 200 obtains power from the mains and charges the battery 105 of the cleaning robot 100 through the power supply component and the charging component 111. After the cleaning robot 100 is fully charged, it drives away from the base station 200 and continues to clean the floor of the room.

When the cleaning robot 100 is a mopping robot, and a mopping component 1101 is provided on the bottom of the mopping robot, the cleaning robot 100 is configured for mopping and cleaning the floor. The cleaning robot 100 mops the floor of the room for a period of time. After the mopping component 1101 becomes dirty, the cleaning robot 100 drives to the base station 200. The cleaning robot 100 enters the base station 200 through the entry port 205 on the base station 200 and is parked at the preset parking position on the base station 200. The state of the cleaning robot 100 parked on the base station 200 can be seen in Fig. 11. At this time, the mopping component 1101 of the cleaning robot 100 is accommodated in the cleaning tank 203. Under the action of the water pump 209, the cleaning water from the clean water tank in the base station 200 flows to the cleaning tank 203, and sprays through a liquid inlet structure on the cleaning tank 203 to the mopping component 1101, and the mopping component 1101 scrapes with the protruded cleaning rib 2031 in the cleaning tank at the same time, so as to realize the cleaning of the mopping component 1101. The dirty water after cleaning the mopping component 1101 flows out of the cleaning tank 203 from a drainage structure on the cleaning tank, and is collected into the dirty water tank under the action of the water pump 209.

It should be understood that the base station 200 described in the embodiments of the present invention is only a specific example, and does not constitute a specific limitation to the base station 200 in the embodiments of the present invention. The base station 200 in the embodiments of the present invention may also be other specific implementations. For example, the base station 200 in the embodiments of the present invention may not include the water tank 204, and the base station body 202 may be connected to a tap water pipe and a drain pipe, so that the mopping component 1101 of the cleaning robot 100 can be cleaned with tap water from the tap water pipe, and the dirty water after cleaning the mopping component 1101 can flow out of the base station 200 through the drain pipe. Or, in other implementations, the base station may have more or fewer components than the base station 200 shown in Fig. 7.

### Embodiment 1

This embodiment of the present invention provides a cleaning control method, which is executed when cleaning an unknown area to be cleaned by a cleaning robot 100, where the cleaning robot 100 is used in conjunction with a base station, the base station is a cleaning device used by the cleaning robot 100, the area to be cleaned includes an entrance edge, the cleaning robot 100 performs a cleaning operation according to a set cleaning direction, and the cleaning direction is a direction pointing from inside of the area to be cleaned to the entrance edge. Referring to Fig. 12, the method includes:
Operation S1201: the cleaning robot 100 acquiring an area map, which is configured to represent the area to be cleaned or a sub-area to be cleaned in the area to be cleaned, and the sub-area to be cleaned being an uncleaned area in the area to be cleaned.

The area to be cleaned may be any area to be cleaned, such as a home area, a room of a home area, a partial area of a room, a large place or a partial area of a large place. The sub-area to be cleaned may be an area after the cleaning robot 100 performs cleaning along edges in the area to be cleaned.

In one possible implementation, prior to this operation, the cleaning robot 100 acquires an area map representing the area to be cleaned or the sub-area to be cleaned, and stores the area map. In this operation, the cleaning robot 100 directly acquires the stored area map when executing the cleaning control method. The cleaning robot 100 may store the area map in a memory. Correspondingly, the cleaning robot 100 may obtain the stored area map by reading the area map from the memory. In another possible implementation, the cleaning robot 100 may acquire the area map at this operation.

Among them, the cleaning robot 100 acquires the area map in the following six ways. In a first implementation, a lidar is installed on the cleaning robot 100. Correspondingly, the cleaning robot 100 can obtain the area map by detecting the area to be cleaned with the laser radar installed on the cleaning robot 100.

In a second implementation, the cleaning robot 100 can acquire the area map through cleaning along edges. Accordingly, the cleaning robot 100 can obtain the area map as follows: the cleaning robot 100 cleans the edges of the area to be cleaned, and obtains the area map according to a cleaning track at the edges. When the area to be cleaned is a home area including a plurality of rooms, the cleaning robot 100 can clean the edges of the area to be cleaned by cleaning edges of each room in the area to be cleaned.

In a third implementation, an inertial measurement unit and a collision sensor are installed on the cleaning robot 100. Accordingly, the cleaning robot 100 can obtain the area map by detecting the area to be cleaned with the inertial measurement unit and the collision sensor.

In a fourth implementation, a visual sensor is installed on the cleaning robot 100. Accordingly, the cleaning robot 100 can obtain the area map by detecting the area to be cleaned through the visual sensor.

In a fifth implementation, a server stores the area map, and the cleaning robot 100 acquires the area map from the server. Accordingly, the operation of the cleaning robot 100 acquiring the area map can be as follows: the cleaning robot 100 sending an acquisition request to the server, the acquisition request carrying an area identification of the area to be cleaned; the server receiving the acquisition request, acquiring the area map according to the area identification, and sending the area map to the cleaning robot 100; and the cleaning robot 100 receiving the area map. The area identification can be an address or the like of the area to be cleaned.

In a sixth implementation, a user directly inputs the area map of the area to be cleaned to the cleaning robot 100 through a terminal. Accordingly, the cleaning robot 100 can acquire the area map by receiving the area map of the area to be cleaned input by the terminal.

It should be noted that the cleaning robot 100 can acquire an area map of an area to be cleaned by any of the above six implementations. The cleaning robot 100 can also acquire the area map of the area to be cleaned through various of the above six implementations to obtain a plurality of area maps, and integrate and correct the acquired plurality of area maps to finally obtain the area map of the area to be cleaned.

Operation S1202: based on the area map, the cleaning robot 100 searching a first uncleaned point closest to a current position of the cleaning robot 100 in the area to be cleaned or the sub-area to be cleaned.

The cleaning robot 100 determines the current location of the cleaning robot 100 in the area map. According to the current location, the cleaning robot 100 searches in the area map for an uncleaned point nearest to the current location of the cleaning robot 100, and takes a position of the uncleaned point in the area to be cleaned as the first uncleaned point.

During searching, the cleaning robot 100 can start the searching from the current position of the cleaning robot 100, so that the first uncleaned point closest to the current position of the cleaning robot 100 can be searched as soon as possible, thereby improving the search efficiency.

When the cleaning robot 100 obtains a plurality of uncleaned points closest to the current location of the cleaning robot 100, the cleaning robot 100 can select the first uncleaned point from the plurality of uncleaned points, where the cleaning robot 100 can randomly select one of the plurality of uncleaned points as the first uncleaned point, or based on the cleaning direction, the cleaning robot 100 can select an uncleaned point in a direction opposite to the cleaning direction as the first uncleaned point from the plurality of uncleaned points. The cleaning direction is a direction directed from inside of the area to be cleaned to the entrance edge, and the entrance edge is an edge for the cleaning robot 100 to enter and exit the area to be cleaned.

It should be noted that, the cleaning robot 100 selects, the uncleaned point in the direction opposite to the cleaning direction from the plurality of uncleaned points, as the first cleaning point. Therefore, the uncleaned point is a point far from the entrance edge, and the cleaning robot 100 can clean the area to be cleaned from the inside of the area to be cleaned toward the entrance edge, thus preventing the cleaning robot 100 from cleaning from a position close to the entrance edge and then moving to the position far from the entrance edge to clean again, and further improving the cleaning efficiency.

Another point to be explained is that, when the cleaning robot 100 searches for the first uncleaned point, it searches at a preset step length. The process can be: the cleaning robot 100 searches for whether there is an uncleaned point closest to the current location of the cleaning robot 100 in a preset step length; if there is one, the searched uncleaned point is the first uncleaned point. If there is no, the cleaning robot 100 searches for whether there is an uncleaned point closest to the current location of the cleaning robot 100 in two preset step lengths. If there is one, the searched uncleaned point is the first uncleaned point; if there is no, the searching is performed in three preset step lengths until the first uncleaned point is searched out.

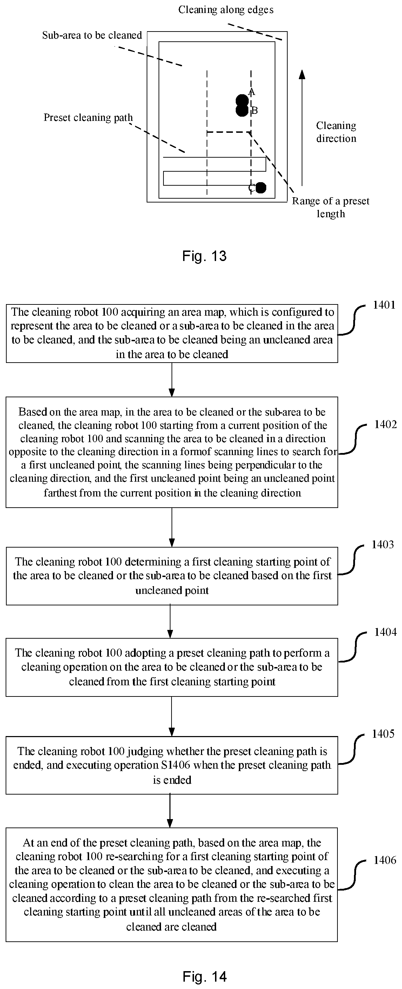

For example, referring to Fig. 13, the current location of the cleaning robot 100 is point A, and the first uncleaned point searched by the cleaning robot 100 is point B. For example, when the cleaning robot 100 first performs cleaning along edges in the area to be cleaned, the area map is a sub-area to be cleaned.

Operation S1203: in the area to be cleaned, within a range of a preset length perpendicular to the cleaning direction, the cleaning robot 100 searching for a second uncleaned point in the area to be cleaned or the sub-area to be cleaned in a direction opposite to the cleaning direction, the second uncleaned point being an uncleaned point farthest from the first uncleaned point in the cleaning direction.

In the area to be cleaned, the cleaning robot 100 searches in the direction opposite to the cleaning direction within a range of a preset length perpendicular to the cleaning direction. When a third uncleaned point is searched, a position of the third uncleaned point is recorded, and the searching is continued in the direction opposite to the cleaning direction. When a fourth uncleaned point is searched, and a first distance between the third uncleaned point and the first uncleaned point in the cleaning direction is less than a second distance between the fourth uncleaned point and the first uncleaned point in the cleaning direction, the position of the third uncleaned point is deleted, and a position of the fourth uncleaned point is recorded. When the first distance is greater than the second distance, the position of the fourth uncleaned point is discarded, and the searching is continued in the direction opposite to the cleaning direction until the area to be cleaned is finished searching. The cleaning robot 100 maps the final recorded position into the area to be cleaned to obtain the second uncleaned point.

The preset length may be less than or equal to a length of an edge of the area to be cleaned or the sub-area to be cleaned. When the preset length is equal to the length of the edge of the area to be cleaned or the sub-area to be cleaned, this operation can be replaced by that: the cleaning robot 100 can directly search the second uncleaned point of the area to be cleaned or the sub-area to be cleaned in the area to be cleaned or the sub-area to be cleaned, along the direction opposite to the cleaning direction, thereby ensuring that the searched second uncleaned point is the uncleaned point farthest from the first uncleaned point in the area to be cleaned or the sub-area to be cleaned, and further improving the subsequent cleaning efficiency. When the preset length is less than the length of the edge of the area to be cleaned, the range of searching for the second uncleaned point is reduced to reduce a search time. Moreover, the preset length can be set and changed as required. In the embodiments of the present invention, the preset length is not specifically limited. For example, the preset length may be equal to a body width of the cleaning robot 100, twice of the body width of the cleaning robot 100, three times of the body width of the cleaning robot 100, or the like.

It should be noted that, when the preset length is smaller than the length of the edge of the area to be cleaned or the sub-area to be cleaned, the cleaning robot 100 can search for a plurality of times, and select the uncleaned point farthest from the first uncleaned point in the cleaning direction from the uncleaned points found each time, thereby the second uncleaned point is found and the accuracy is improved. For example, the cleaning robot 100 performs two searches to find the second uncleaned point. Accordingly, the current operation may be replaced by that: within the area to be cleaned or the sub-area to be cleaned and starting from a first position, the cleaning robot 100 searches for a fifth uncleaned point of the area to be cleaned or the sub-area to be cleaned in the direction opposite to the cleaning direction within the range of the preset length perpendicular to the cleaning direction. Then the cleaning robot 100 starts from a second position, and searches for a sixth uncleaned point of the area to be cleaned or the sub-area to be cleaned in the direction opposite to the cleaning direction within the range of the preset length perpendicular to the cleaning direction. The uncleaned point farthest from the first uncleaned point in the cleaning direction is selected from the fifth uncleaned point and the sixth uncleaned point, and taken as the second uncleaned point. The first position and the second position are different, and the first position and the second position are spaced for a certain distance perpendicular to the cleaning direction.

Another point to be explained is that when there are a plurality of uncleaned points farthest from the first uncleaned point in the cleaning direction, the cleaning robot 100 selects the uncleaned point farthest from the first uncleaned point as the second uncleaned point from the plurality of uncleaned points.

For example, referring to Fig. 13 again, the cleaning robot 100 searches for the second uncleaned point which is point C in the direction opposite to the cleaning direction within the range of the preset length perpendicular to the cleaning direction within the area to be cleaned or the sub-area to be cleaned.

Operation S1204: the cleaning robot 100 determining a first cleaning starting point of the area to be cleaned or the sub-area to be cleaned based on the second uncleaned point.

In one possible implementation, the cleaning robot 100 directly takes the second uncleaned point as the first cleaning starting point of the area to be cleaned or the sub-area to be cleaned. In another possible implementation, the cleaning robot 100 determines whether there are uncleaned points on an edge where the second uncleaned point is located. When there is an uncleaned point on the edge where the second uncleaned point is located, the cleaning robot 100 moves to an end point of the edge and takes the end point of the edge as the first cleaning starting point of the area to be cleaned or the sub-area to be cleaned. When there is no uncleaned point on the edge where the second uncleaned point is located, the cleaning robot 100 takes the second uncleaned point as the first cleaning starting point of the area to be cleaned or the sub-area to be cleaned.

It should be noted that there may be multiple end points on the edge where the first uncleaned point is located. For example, there are two endpoints, a left end point and a right end point. The cleaning robot 100 can move to any end point of the edge, for example, to the left end point of the edge or to the right end point of the edge.

Operation S1205: the cleaning robot 100 adopting a preset cleaning path to perform a cleaning operation on the area to be cleaned or the sub-area to be cleaned from the first cleaning starting point.

The preset cleaning path may be a first cleaning path or a second cleaning path. The first cleaning path is a path gradually advancing in the cleaning direction and turning back and forth in a direction perpendicular to the cleaning direction. The second cleaning path is a path that gradually advancing in the direction perpendicular to the cleaning direction and turning back and forth in a direction parallel to the cleaning direction. Further, when a distance between two side edges of the area to be cleaned or the sub-area to be cleaned in the direction perpendicular to the cleaning direction is greater than a second preset distance value, the cleaning robot 100 adopts the first cleaning path to execute the cleaning operation to clean the area to be cleaned or the sub-area to be cleaned. When the distance between the two side edges of the area to be cleaned or the sub-area to be cleaned in the direction perpendicular to the cleaning direction is not greater than the second preset distance value, the cleaning robot 100 adopts the second cleaning path to execute the cleaning operation to clean the area to be cleaned or the sub-area to be cleaned.

In the current operation, the cleaning robot 100 adopting the first cleaning operation to execute the cleaning operation to clean the area to be cleaned or the sub-area to be cleaned from the first cleaning starting point is taken as an example for illustration. Accordingly, the current operation can be that: the cleaning robot 100 starts from the first cleaning starting point, moves to an edge of the area to be cleaned in the direction perpendicular to the cleaning direction, advances a first preset distance value in the cleaning direction, and moves from the edge of the area to be cleaned or the sub-area to be cleaned to another edge of the area to be cleaned or the sub-area to be cleaned in the direction perpendicular to the cleaning direction, then, advances the first preset distance value along the cleaning direction, and moves from the other edge of the area to be cleaned or the sub-area to be cleaned to the edge of the area to be cleaned or the sub-area to be cleaned in the direction perpendicular to the cleaning direction, and repeats multiple times until the cleaning of the area to be cleaned or the sub-area to be cleaned is completed.

It should be noted that when the first cleaning starting point is at an edge of the area to be cleaned or the sub-area to be cleaned, the cleaning robot 100 can directly perform the cleaning operation from the first cleaning starting point. When the first cleaning starting point is not at an edge of the area to be cleaned or the sub-area to be cleaned, the cleaning robot 100 can first move from the first cleaning starting point to an edge of the area to be cleaned or the sub-area to be cleaned before starting the cleaning operation.

The first preset distance value may be set and changed according to the body width of the cleaning robot 100. In the embodiment of the present disclosure, the first preset distance value is not specifically limited. For example, the first preset distance value may be equal to the body width, 0.8 times of the body width, or the like.

The cleaning robot 100 adopting the preset cleaning path to perform the cleaning operation on the area to be cleaned or the sub-area to be cleaned from the first cleaning starting point is mainly performing the cleaning operation on the floor of the area to be cleaned or the sub-area to be cleaned. The cleaning robot 100 is provided with a cleaning component for the cleaning robot 100 to perform the cleaning operation on the floor. The cleaning component is a mopping module or a sweeping module, the mopping module is configured for mopping and cleaning the floor, and the sweeping module is configured for sweeping and cleaning the floor.

For example, referring to Fig. 13 again, the cleaning robot 100 moves from point C and adopts the first cleaning path to perform the cleaning operation on the floor in the area to be cleaned.

Operation S1206: the cleaning robot 100 judging whether the preset cleaning path is ended, and executing operation S1207 when the preset cleaning path is ended.

When the cleaning robot 100 encounters an obstacle during the cleaning operation or power in the cleaning robot 100 reaches a threshold value and needs to return to the base station 200 for charging or the cleaning robot 100 needs to return to the base station for cleaning the cleaning component, the cleaning robot 100 determines that the preset cleaning path is ended.

Operation S1207: at an end of the preset cleaning path, based on the area map, the cleaning robot 100 re-searching a first cleaning starting point of the area to be cleaned or the sub-area to be cleaned, and executing a cleaning operation to clean the area to be cleaned or the sub-area to be cleaned according to a preset cleaning path from the re-searched first cleaning starting point until all uncleaned areas of the area to be cleaned are cleaned.

The operation of the cleaning robot 100 re-searching a first cleaning starting point of the area to be cleaned or the sub-area to be cleaned based on the area map is similar to the operation of the cleaning robot 100 determining a first cleaning starting point of the area to be cleaned or the sub-area to be cleaned based on the area map, and will not be repeated here.

In one possible implementation, when the cleaning robot 100 encounters an obstacle during cleaning, the cleaning robot 100 stops cleaning and then re-determines a first cleaning starting point of an uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 2

This embodiment of the present invention provides a cleaning control method, which is executed when cleaning an unknown area to be cleaned by a cleaning robot 100, where the cleaning robot 100 is used in conjunction with a base station, the base station is a cleaning device used by the cleaning robot 100, the area to be cleaned includes an entrance edge, the cleaning robot 100 performs a cleaning operation according to a set cleaning direction, and the cleaning direction is a direction pointing from inside of the area to be cleaned to the entrance edge. Referring to Fig. 14, the method includes:
Operation S1401: the cleaning robot 100 acquiring an area map, which is configured to represent the area to be cleaned or a sub-area to be cleaned in the area to be cleaned, and the sub-area to be cleaned being an uncleaned area in the area to be cleaned.

This operation is the same as the operation S1201 and will not be repeated here.

Operation S1402: based on the area map, in the area to be cleaned or the sub-area to be cleaned, the cleaning robot 100 starting from a current position of the cleaning robot 100 and scanning the area to be cleaned in a direction opposite to the cleaning direction in a form of scanning lines to search for a first uncleaned point, the scanning lines being perpendicular to the cleaning direction, and the first uncleaned point being an uncleaned point farthest from the current position in the cleaning direction.

The cleaning robot 100 determines the current position of the cleaning robot 100 in the area map, starts from the current position and scans in the area map in the direction opposite to the cleaning direction in the form of scanning lines. When a seventh uncleaned point is scanned, a position of the seventh uncleaned point is recorded. The scanning is continued. When an eighth uncleaned point is scanned and a third distance is less than a fourth distance, the position of the seventh uncleaned point is deleted, and a position of the eighth uncleaned point is recorded. The third distance is a distance between the seventh uncleaned point and the current position of the cleaning robot 100 in the cleaning direction, and the fourth distance is a distance between the eighth uncleaned point and the current position of the cleaning robot 100 in the cleaning direction. The position of the seventh uncleaned point is deleted, and the position of the eighth uncleaned point is recorded. When the third distance is greater than the fourth distance, the position of the eighth uncleaned point is discarded, and the scanning continues until the whole of the area map is scanned. The cleaning robot 100 maps the final recorded position into the area to be cleaned or the sub-area to be cleaned to obtain the first uncleaned point.

It should be noted that when there are a plurality of uncleaned points farthest from the current position in the cleaning direction, the cleaning robot 100 selects the uncleaned point farthest from the current position as the first uncleaned point from the plurality of uncleaned points.

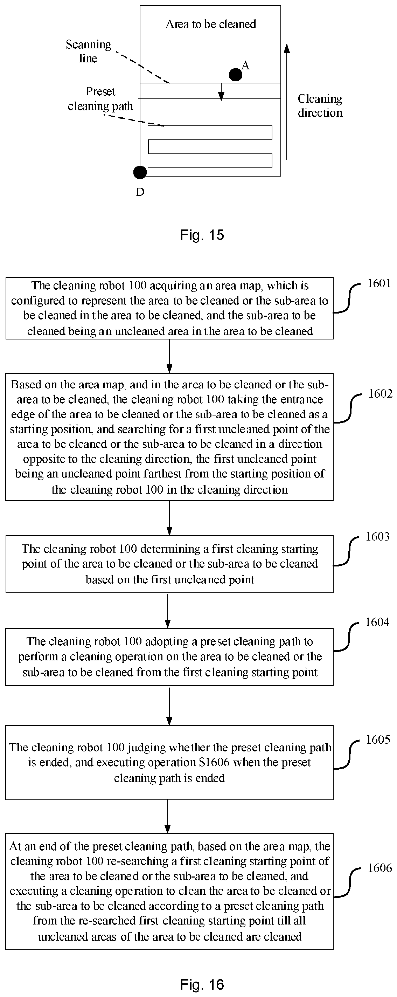

For example, referring to Fig. 15, the current position of the cleaning robot 100 is point A, and there are a plurality of uncleaned points searched out by the cleaning robot 100 that are farthest from the current position in the cleaning direction, and the first uncleaned point which is point D and the farthest from the current position is selected from the plurality of uncleaned points.

Operation S1403: the cleaning robot 100 determining a first cleaning starting point of the area to be cleaned or the sub-area to be cleaned based on the first uncleaned point.

In one possible implementation, the cleaning robot 100 directly takes the first uncleaned point as the first cleaning starting point of the area to be cleaned or the sub-area to be cleaned. In another possible implementation, the cleaning robot 100 determines whether there is an uncleaned point on an edge where the first uncleaned point is located. When there is an uncleaned point on the edge where the first uncleaned point is located, the cleaning robot 100 moves to an end point of the edge and takes the end point of the edge as the first cleaning starting point of the area to be cleaned or the sub-area to be cleaned. When there is no uncleaned point on the edge where the first uncleaned point is located, the cleaning robot 100 takes the first uncleaned point as the first cleaning starting point of the area to be cleaned or the sub-area to be cleaned.

It should be noted that there may be multiple end points on the edge where the first uncleaned point is located. For example, there are two endpoints, a left end point and a right end point. The cleaning robot 100 can move to any end point of the edge, for example, to the left end point of the edge or to the right end point of the edge.

Operation S1404: the cleaning robot 100 adopting a preset cleaning path to perform a cleaning operation on the area to be cleaned or the sub-area to be cleaned from the first cleaning starting point.

This operation is the same as operation S1205 and will not be repeated here.

For example, referring to Fig. 15 again, the cleaning robot 100 adopts a preset cleaning path to perform a cleaning operation from the first cleaning starting point on the area to be cleaned or the sub-area to be cleaned.

Operation S1405: the cleaning robot 100 judging whether the preset cleaning path is ended, and executing operation S1406 when the preset cleaning path is ended.

Operation S1406: at an end of the preset cleaning path, based on the area map, the cleaning robot 100 re-searching for a first cleaning starting point of the area to be cleaned or the sub-area to be cleaned, and executing a cleaning operation to clean the area to be cleaned or the sub-area to be cleaned according to a preset cleaning path from the re-searched first cleaning starting point until all uncleaned areas of the area to be cleaned are cleaned.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 3

This embodiment of the present invention provides a cleaning control method, which is executed when cleaning an unknown area to be cleaned or an unknown sub-area by a cleaning robot 100, where the cleaning robot 100 is used in conjunction with a base station, the base station is a cleaning device used by the cleaning robot 100, the area to be cleaned or the sub-area to be cleaned includes an entrance edge, the cleaning robot 100 performs a cleaning operation according to a set cleaning direction, and the cleaning direction is a direction pointing from inside of the area to be cleaned or the sub-area to be cleaned to the entrance edge. Referring to Fig. 16, the method includes:
Operation S1601: the cleaning robot 100 acquiring an area map, which is configured to represent the area to be cleaned or the sub-area to be cleaned in the area to be cleaned, and the sub-area to be cleaned being an uncleaned area in the area to be cleaned.

This operation is the same as operation S1201 and will not be repeated here.

Operation S1602: based on the area map, and in the area to be cleaned or the sub-area to be cleaned, the cleaning robot 100 taking the entrance edge of the area to be cleaned or the sub-area to be cleaned as a starting position, and searching for a first uncleaned point of the area to be cleaned or the sub-area to be cleaned in a direction opposite to the cleaning direction, the first uncleaned point being an uncleaned point farthest from the starting position of the cleaning robot 100 in the cleaning direction.

The cleaning robot 100 can use any point on the entrance edge of the area to be cleaned or the sub-area to be cleaned as the starting position of the cleaning robot 100. A center point of the entrance edge of the area to be cleaned or the sub-area to be cleaned is taken as the starting position of the cleaning robot 100, or an end point of the entrance edge of the area to be cleaned or the sub-area to be cleaned is taken as the starting position of the cleaning robot 100. For example, a left end point of the entrance edge of the area to be cleaned or the sub-area to be cleaned is taken as the starting position of the cleaning robot 100, or a right end point of the entrance edge of the area to be cleaned or the sub-area to be cleaned is taken as the starting position of the cleaning robot 100.

It should be noted that when there are a plurality of uncleaned points farthest from the starting position of the cleaning robot 100 in the cleaning direction, the cleaning robot 100 selects the uncleaned point farthest from the starting position as the first uncleaned point from the plurality of uncleaned points.

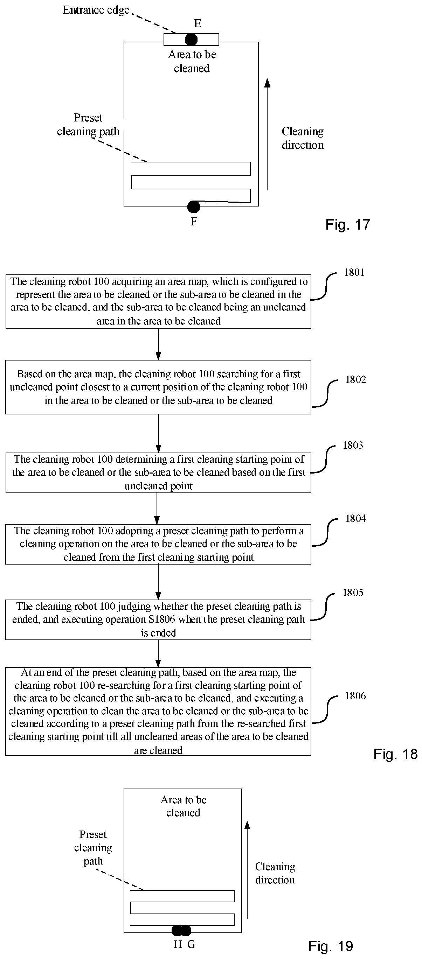

For example, referring to Fig. 17, the starting position of the cleaning robot 100 is point E, and the determined first uncleaned point is point F.

Operation S1603: the cleaning robot 100 determining a first cleaning starting point of the area to be cleaned or the sub-area to be cleaned based on the first uncleaned point.

This operation is the same as operation S1403 and will not be repeated here.

Operation S1604: the cleaning robot 100 adopting a preset cleaning path to perform a cleaning operation on the area to be cleaned or the sub-area to be cleaned from the first cleaning starting point.

This operation is the same as the operation S1205 and will not be repeated here.

For example, referring to Fig. 17 again, the cleaning robot 100 moves from point F and adopts a first cleaning path to perform a cleaning operation on the floor of the area to be cleaned or the sub-area to be cleaned.

Operation S1605: the cleaning robot 100 judging whether the preset cleaning path is ended, and executing operation S1606 when the preset cleaning path is ended.

Operation S1606: at an end of the preset cleaning path, based on the area map, the cleaning robot 100 re-searching a first cleaning starting point of the area to be cleaned or the sub-area to be cleaned, and executing a cleaning operation to clean the area to be cleaned or the sub-area to be cleaned according to a preset cleaning path from the re-searched first cleaning starting point till all uncleaned areas of the area to be cleaned are cleaned.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 4

This embodiment of the present invention provides a cleaning control method, which is executed when cleaning an unknown area to be cleaned or an unknown sub-area by a cleaning robot 100, where the cleaning robot 100 is used in conjunction with a base station, the base station is a cleaning device used by the cleaning robot 100, the area to be cleaned or the sub-area to be cleaned includes an entrance edge, the cleaning robot 100 performs a cleaning operation according to a set cleaning direction, and the cleaning direction is a direction pointing from inside of the area to be cleaned or the sub-area to be cleaned to the entrance edge. Referring to Fig. 18, the method includes:
Operation S1801: the cleaning robot 100 acquiring an area map, where the area map is configured to represent the area to be cleaned or the sub-area to be cleaned in the area to be cleaned, and the sub-area to be cleaned is an uncleaned area in the area to be cleaned.

This operation is the same as the operation S1201 and will not be repeated here.

After acquiring the area map, the cleaning robot 100 can directly perform operation S1802. It can also determine whether there are uncleaned points in a direction opposite to the cleaning direction from the current position of the cleaning robot 100. When there is no uncleaned point, operation S1802 is executed. When there is an uncleaned point, the above operations S1202-S1205 can be executed to perform the cleaning operation, or, the above operations S1402-S1404 can be executed to perform the cleaning operation, or, the above operations S1602-S1604 can be executed to perform the cleaning operation.

Operation S1802: based on the area map, the cleaning robot 100 searching for a first uncleaned point closest to a current position of the cleaning robot 100 in the area to be cleaned or the sub-area to be cleaned.

The cleaning robot 100 determines the current location of the cleaning robot 100 in the area map. According to the current location, the cleaning robot 100 searches in the area map for an uncleaned point nearest to the current location of the cleaning robot 100, and takes a position of the uncleaned point in the area to be cleaned or the sub-area to be cleaned as the first uncleaned point.

It should be noted that when the cleaning robot 100 obtains a plurality of uncleaned points closest to the current location of the cleaning robot 100, the cleaning robot 100 can select the first uncleaned point from the plurality of uncleaned points, where the cleaning robot 100 can randomly select one of the plurality of uncleaned points as the first uncleaned point, or based on the cleaning direction, the cleaning robot 100 can select an uncleaned point in a direction perpendicular to the cleaning direction as the first uncleaned point from the plurality of uncleaned points. The cleaning direction is a direction directed from inside of the area to be cleaned to the entrance edge, and the entrance edge is an edge for the cleaning robot 100 to enter and exit the area to be cleaned.

For example, referring to Fig. 19, the current position of the cleaning robot 100 is point H. Starting from point H, there is no uncleaned point in a direction opposite to the cleaning direction. The first uncleaned point searched by the cleaning robot 100 is point G.

Operation S1803: the cleaning robot 100 determining a first cleaning starting point of the area to be cleaned or the sub-area to be cleaned based on the first uncleaned point.

This operation is the same as operation S1403 and will not be repeated here.

Operation S1804: the cleaning robot 100 adopting a preset cleaning path to perform a cleaning operation on the area to be cleaned or the sub-area to be cleaned from the first cleaning starting point.

This operation is the same as operation S1205 and will not be repeated here.

For example, referring to Fig. 19 again, the cleaning robot 100 starts at point G and moves along the first cleaning path to perform a cleaning operation on the floor in the area to be cleaned or the sub-area to be cleaned.

Operation S1805: the cleaning robot 100 judging whether the preset cleaning path is ended, and executing operation S1806 when the preset cleaning path is ended.

Operation S1806: at an end of the preset cleaning path, based on the area map, the cleaning robot 100 re-searching for a first cleaning starting point of the area to be cleaned or the sub-area to be cleaned, and executing a cleaning operation to clean the area to be cleaned or the sub-area to be cleaned according to a preset cleaning path from the re-searched first cleaning starting point till all uncleaned areas of the area to be cleaned are cleaned.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 5

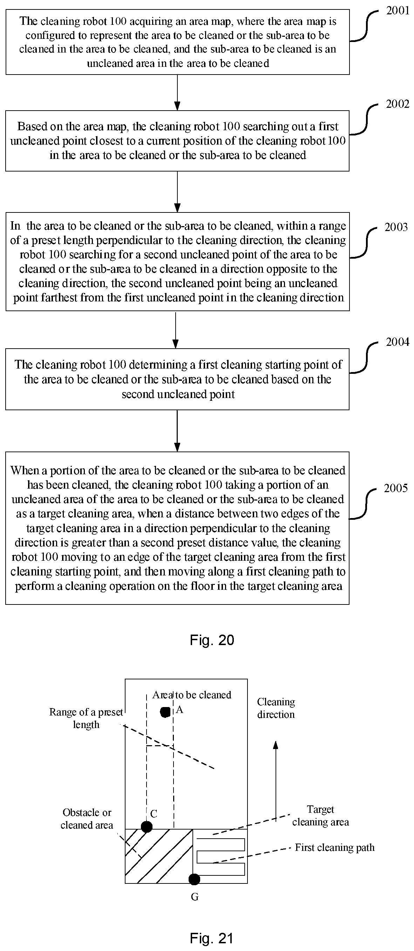

This embodiment of the present invention provides a cleaning control method, which is executed when cleaning an unknown area to be cleaned or an unknown sub-area by a cleaning robot 100, where the cleaning robot 100 is used in conjunction with a base station, the base station is a cleaning device used by the cleaning robot 100, the area to be cleaned or the sub-area to be cleaned includes an entrance edge, the cleaning robot 100 performs a cleaning operation according to a set cleaning direction, and the cleaning direction is a direction pointing from inside of the area to be cleaned or the sub-area to be cleaned to the entrance edge. Referring to Fig. 20, the method includes:
Operation S2001: the cleaning robot 100 acquiring an area map, where the area map is configured to represent the area to be cleaned or the sub-area to be cleaned in the area to be cleaned, and the sub-area to be cleaned is an uncleaned area in the area to be cleaned.

Operation S2002: based on the area map, the cleaning robot 100 searching for a first uncleaned point closest to a current position of the cleaning robot 100 in the area to be cleaned or the sub-area to be cleaned.

Operation S2003: in the area to be cleaned or the sub-area to be cleaned, within a range of a preset length perpendicular to the cleaning direction, the cleaning robot 100 searching for a second uncleaned point of the area to be cleaned or the sub-area to be cleaned in a direction opposite to the cleaning direction, the second uncleaned point being an uncleaned point farthest from the first uncleaned point in the cleaning direction.

Operation S2004: the cleaning robot 100 determining a first cleaning starting point of the area to be cleaned or the sub-area to be cleaned based on the second uncleaned point.

The above operations S2001-S2004 are the same to operations S1201-S1204 and will not be described here.

Operation S2005: when a portion of the area to be cleaned or the sub-area to be cleaned has been cleaned, the cleaning robot 100 taking a portion of an uncleaned area of the area to be cleaned or the sub-area to be cleaned as a target cleaning area, when a distance between two edges of the target cleaning area in a direction perpendicular to the cleaning direction is greater than a second preset distance value, the cleaning robot 100 moving to an edge of the target cleaning area from the first cleaning starting point, and then moving along a first cleaning path to perform a cleaning operation on the floor in the target cleaning area.

The first cleaning path is a path gradually advancing in the cleaning direction and turning back and forth in the direction perpendicular to the cleaning direction. The cleaning robot 100 moves along the first cleaning path in the target cleaning area. A process of performing a cleaning operation on the floor of the target cleaning area is similar to a process of moving the cleaning robot 100 along the first cleaning path in the area to be cleaned or the sub-area to be cleaned to perform a cleaning operation on the floor of the area to be cleaned or the sub-area to be cleaned, and will not be repeated here.

The cleaning robot 100 determines an area on one side of the cleaned area in the area to be cleaned or the sub-area to be cleaned as the target cleaning area. Further, the cleaning robot 100 can move to either side edge of the target cleaning area from the first cleaning starting point. One example is to move to a side edge closest to the first cleaning starting point. Another example is to move to a side edge opposite to the cleaning direction.

It should be noted that after performing the cleaning operation on the target cleaning area, the cleaning robot 100 re-determines a target cleaning area, and performs a cleaning operation to the re-determined target cleaning area till the whole of the area to be cleaned or the sub-area to be cleaned is cleaned.

Another point to be explained is that the first preset distance value and the second preset distance value may be the same or different. Moreover, the second preset distance value may be set and changed according to a body width of the cleaning robot 100. In the embodiment of the present disclosure, the second preset distance value is not specifically limited. For example, the second preset distance value may be twice of the body width or three times of the body width, etc.

For example, referring to Fig. 21, the target cleaning area is an area on the right of an obstacle or the cleaned area. Point A is the current position of the cleaning robot 100, and point C is the first cleaning starting point. The cleaning robot 100 moves to point G on a side edge of the target cleaning area from point C, and the cleaning robot 100 moves along the first cleaning path to perform a cleaning operation on the floor in the target cleaning area from point G.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 6

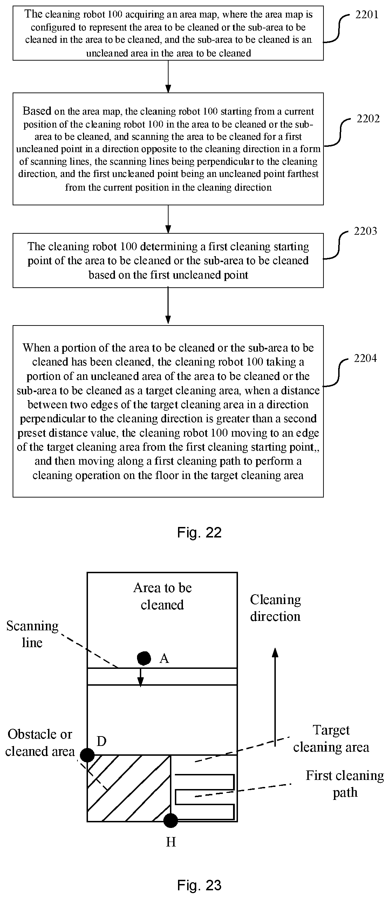

This embodiment of the present invention provides a cleaning control method, which is executed when cleaning an unknown area to be cleaned or an unknown sub-area by a cleaning robot 100, where the cleaning robot 100 is used in conjunction with a base station, the base station is a cleaning device used by the cleaning robot 100, the area to be cleaned or the sub-area to be cleaned includes an entrance edge, the cleaning robot 100 performs a cleaning operation according to a set cleaning direction, and the cleaning direction is a direction pointing from inside of the area to be cleaned or the sub-area to be cleaned to the entrance edge. Referring to Fig. 22, the method includes:
Operation S2201: the cleaning robot 100 acquiring an area map, where the area map is configured to represent the area to be cleaned or the sub-area to be cleaned in the area to be cleaned, and the sub-area to be cleaned is an uncleaned area in the area to be cleaned.

Operation S2202: based on the area map, the cleaning robot 100 starting from a current position of the cleaning robot 100 in the area to be cleaned or the sub-area to be cleaned, and scanning the area to be cleaned for a first uncleaned point in a direction opposite to the cleaning direction in a form of scanning lines, the scanning lines being perpendicular to the cleaning direction, and the first uncleaned point being an uncleaned point farthest from the current position in the cleaning direction.

Operation S2203: the cleaning robot 100 determining a first cleaning starting point of the area to be cleaned or the sub-area to be cleaned based on the first uncleaned point.

The above operations S2201-S2203 are the same as operations S1401-S1403 and will not be described here.

Operation S2204: when a portion of the area to be cleaned or the sub-area to be cleaned has been cleaned, the cleaning robot 100 taking a portion of an uncleaned area of the area to be cleaned or the sub-area to be cleaned as a target cleaning area, when a distance between two edges of the target cleaning area in a direction perpendicular to the cleaning direction is greater than a second preset distance value, the cleaning robot 100 moving to an edge of the target cleaning area from the first cleaning starting point, and then moving along a first cleaning path to perform a cleaning operation on the floor in the target cleaning area.

There may be some areas that have been cleaned during the cleaning process. Some areas of the remaining uncleaned areas in the area to be cleaned or the sub-area to be cleaned are the target cleaning areas. When the distance between the side edges of a target cleaning area in the direction perpendicular to the cleaning direction is greater than the second preset distance value, the cleaning robot 100 starts from the first cleaning starting point, moves to a side edge of the target cleaning area and moves along the first cleaning path to perform a cleaning operation on the floor in the target cleaning area. The first cleaning path is a path gradually advancing in the direction of the cleaning direction and turning back and forth in a direction perpendicular to the cleaning direction.

This operation is the same as operation S2005 and will not be repeated here.

For example, referring to Fig. 23, the target cleaning area is an area on the right of an obstacle or the cleaned area, point A is the current position of the cleaning robot 100, point D is the first cleaning starting point, the cleaning robot 100 moves from point D to point H, and beginning from point H, moves along the first cleaning path to perform a cleaning operation on the floor in the target cleaning area.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 7

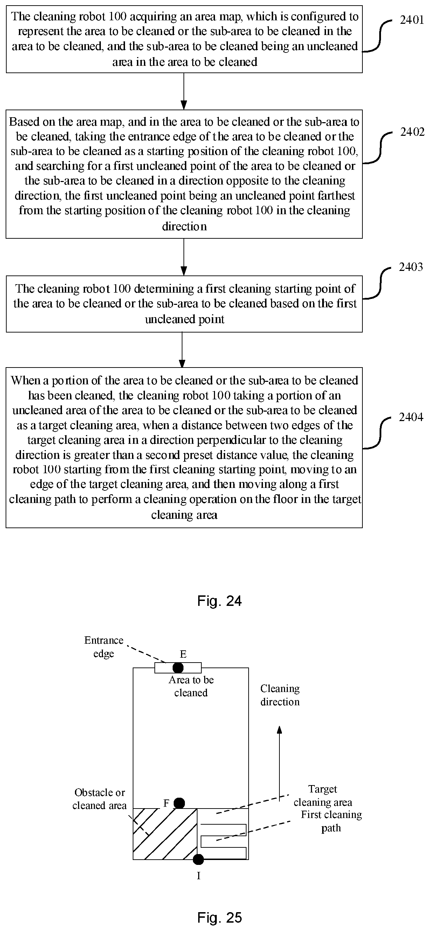

This embodiment of the present invention provides a cleaning control method, which is executed when cleaning an unknown area to be cleaned or an unknown sub-area by a cleaning robot 100, where the cleaning robot 100 is used in conjunction with a base station, the base station is a cleaning device used by the cleaning robot 100, the area to be cleaned or the sub-area to be cleaned includes an entrance edge, the cleaning robot 100 performs a cleaning operation according to a set cleaning direction, and the cleaning direction is a direction pointing from inside of the area to be cleaned or the sub-area to be cleaned to the entrance edge. Referring to Fig. 24, the method includes:
Operation S2401: the cleaning robot 100 acquiring an area map, which is configured to represent the area to be cleaned or the sub-area to be cleaned in the area to be cleaned, and the sub-area to be cleaned being an uncleaned area in the area to be cleaned.

Operation S2402: based on the area map, and in the area to be cleaned or the sub-area to be cleaned, taking the entrance edge of the area to be cleaned or the sub-area to be cleaned as a starting position of the cleaning robot 100, and searching for a first uncleaned point of the area to be cleaned or the sub-area to be cleaned in a direction opposite to the cleaning direction, the first uncleaned point being an uncleaned point farthest from the starting position of the cleaning robot 100 in the cleaning direction.

Operation S2403: the cleaning robot 100 determining a first cleaning starting point of the area to be cleaned or the sub-area to be cleaned based on the first uncleaned point.

The above operations S2401-S2403 are the same as operations S1601-S1603 and will not be described here.

Operation S2404: when a portion of the area to be cleaned or the sub-area to be cleaned has been cleaned, the cleaning robot 100 taking a portion of an uncleaned area of the area to be cleaned or the sub-area to be cleaned as a target cleaning area, when a distance between two edges of the target cleaning area in a direction perpendicular to the cleaning direction is greater than a second preset distance value, the cleaning robot 100 moving to an edge of the target cleaning area from the first cleaning starting point, and then moving along a first cleaning path to perform a cleaning operation on the floor in the target cleaning area.

The first cleaning path is a path gradually advancing in the cleaning direction and turning back and forth in the direction perpendicular to the cleaning direction. This operation is the same as operation S2005, and will not be repeated here.

For example, referring to Fig. 25, the target cleaning area is an area on the right of an obstacle or the cleaned area, point E is the starting position of the cleaning robot 100, point F is the first cleaning starting point, the cleaning robot 100 moves from point F to point I, and beginning from point I, moves along the first cleaning path to perform a cleaning operation on the floor in the target cleaning area.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 8

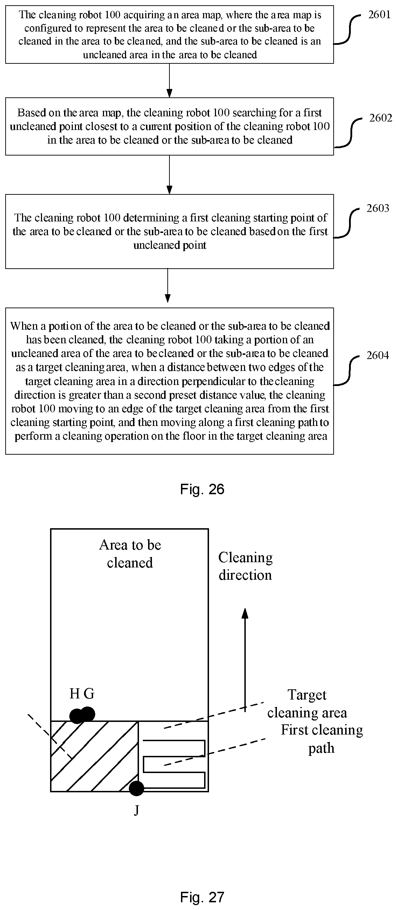

This embodiment of the present invention provides a cleaning control method, which is executed when cleaning an unknown area to be cleaned or an unknown sub-area by a cleaning robot 100, where the cleaning robot 100 is used in conjunction with a base station, the base station is a cleaning device used by the cleaning robot 100, the area to be cleaned or the sub-area to be cleaned includes an entrance edge, the cleaning robot 100 performs a cleaning operation according to a set cleaning direction, and the cleaning direction is a direction pointing from inside of the area to be cleaned or the sub-area to be cleaned to the entrance edge. Referring to Fig. 26, the method includes:
Operation S2601: the cleaning robot 100 acquiring an area map, where the area map is configured to represent the area to be cleaned or the sub-area to be cleaned in the area to be cleaned, and the sub-area to be cleaned is an uncleaned area in the area to be cleaned.

Operation S2602: based on the area map, the cleaning robot 100 searching for a first uncleaned point closest to a current position of the cleaning robot 100 in the area to be cleaned or the sub-area to be cleaned.

Operation S2603: the cleaning robot 100 determining a first cleaning starting point of the area to be cleaned or the sub-area to be cleaned based on the first uncleaned point.

The above operations S2601-S2603 are the same as operations S1801-S1803 and will not be described here.

Operation S2604: when a portion of the area to be cleaned or the sub-area to be cleaned has been cleaned, the cleaning robot 100 taking a portion of an uncleaned area of the area to be cleaned or the sub-area to be cleaned as a target cleaning area, when a distance between two edges of the target cleaning area in a direction perpendicular to the cleaning direction is greater than a second preset distance value, the cleaning robot 100 moving to an edge of the target cleaning area from the first cleaning starting point, and then moving along a first cleaning path to perform a cleaning operation on the floor in the target cleaning area. This operation is the same as operation S2005 and will not be repeated here.

For example, referring to Fig. 27, the target cleaning area is an area on the right of an obstacle or the cleaned area, point G is the current position of the cleaning robot 100, point H is the first cleaning starting point, the cleaning robot 100 moves from point H to point J, and beginning from point J, moves along the first cleaning path to perform a cleaning operation on the floor in the target cleaning area.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 9

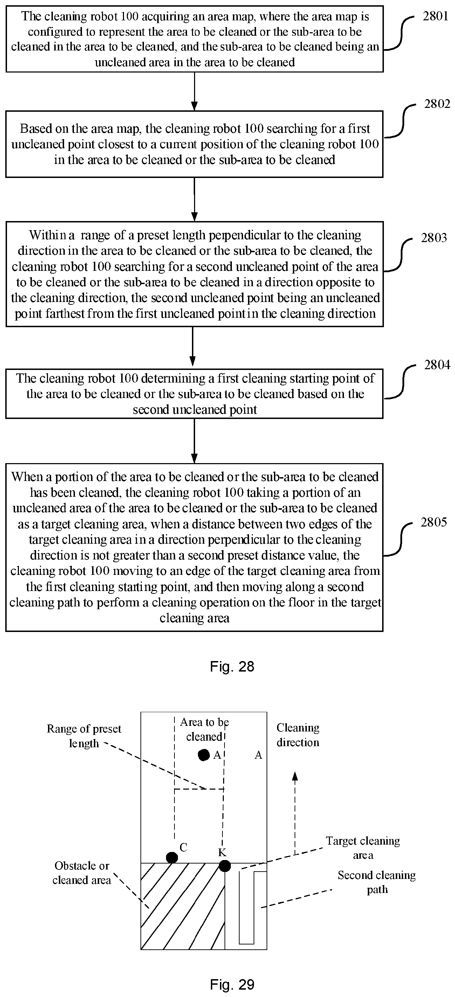

This embodiment of the present invention provides a cleaning control method, which is executed when cleaning an unknown area to be cleaned or an unknown sub-area by a cleaning robot 100, where the cleaning robot 100 is used in conjunction with a base station, the base station is a cleaning device used by the cleaning robot 100, the area to be cleaned or the sub-area to be cleaned includes an entrance edge, the cleaning robot 100 performs a cleaning operation according to a set cleaning direction, and the cleaning direction is a direction pointing from inside of the area to be cleaned or the sub-area to be cleaned to the entrance edge. Referring to Fig. 28, the method includes:
Operation S2801: the cleaning robot 100 acquiring an area map, where the area map is configured to represent the area to be cleaned or the sub-area to be cleaned in the area to be cleaned, and the sub-area to be cleaned being an uncleaned area in the area to be cleaned.

Operation S2802: based on the area map, the cleaning robot 100 searching for a first uncleaned point closest to a current position of the cleaning robot 100 in the area to be cleaned or the sub-area to be cleaned.

Operation S2803: within a range of a preset length perpendicular to the cleaning direction in the area to be cleaned or the sub-area to be cleaned, the cleaning robot 100 searching for a second uncleaned point of the area to be cleaned or the sub-area to be cleaned in a direction opposite to the cleaning direction, the second uncleaned point being an uncleaned point farthest from the first uncleaned point in the cleaning direction.

Operation S2804: the cleaning robot 100 determining a first cleaning starting point of the area to be cleaned or the sub-area to be cleaned based on the second uncleaned point.

The above operations S2801-S2804 are the same as operations S2001-S2004 and will not be described here.

Operation S2805: when a portion of the area to be cleaned or the sub-area to be cleaned has been cleaned, the cleaning robot 100 taking a portion of an uncleaned area of the area to be cleaned or the sub-area to be cleaned as a target cleaning area, when a distance between two edges of the target cleaning area in a direction perpendicular to the cleaning direction is not greater than a second preset distance value, the cleaning robot 100 moving to an edge of the target cleaning area from the first cleaning starting point, and then moving along a second cleaning path to perform a cleaning operation on the floor in the target cleaning area.

The second cleaning path is a path gradually advancing in a direction perpendicular to the cleaning direction and turning back and forth in a direction parallel to the cleaning direction.

For example, referring to Fig. 29, the target cleaning area is on the right side of the cleaned area, point A is the current position of the cleaning robot 100, point J is the first cleaning starting point, and the cleaning robot 100 starts from point J and moves along the second cleaning path to perform a cleaning operation on the floor in the target cleaning area.

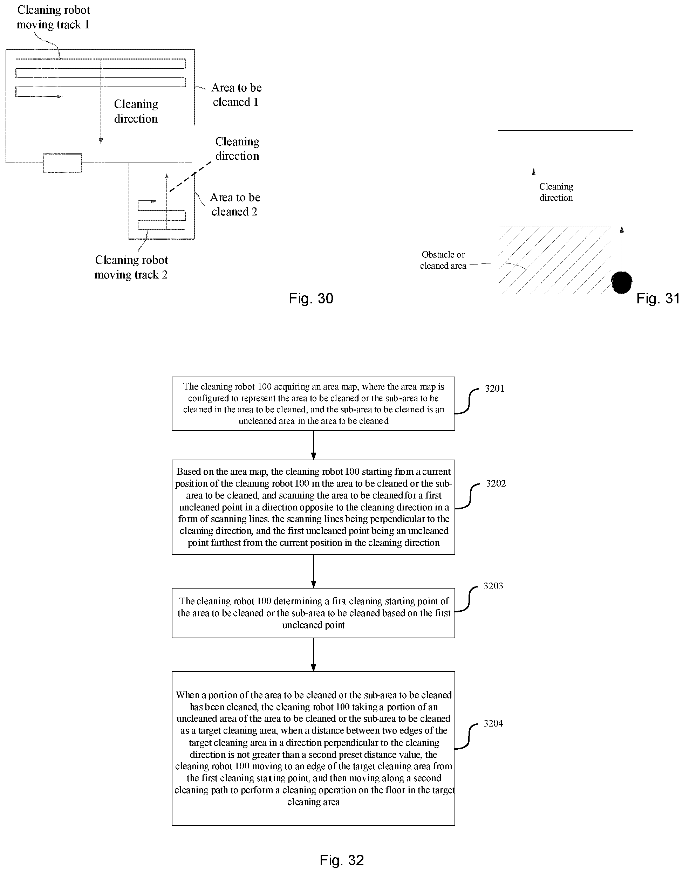

As another example, referring to Fig. 30, the areas to be cleaned or the sub-area to be cleaned is the area to be cleaned or the sub-area to be cleaned 1 and the area to be cleaned or the sub-area to be cleaned 2, and a distance between two sides of the area to be cleaned or the sub-area to be cleaned 1 and a distance between two sides of the area to be cleaned or the sub-area to be cleaned 2 are both greater than the first preset distance value. A cleaning direction of the area to be cleaned or the sub-area to be cleaned 1 is vertically downward, and a cleaning direction of the area to be cleaned or the sub-area to be cleaned 2 is vertically upward. A first cleaning starting point of the area to be cleaned or the sub-area to be cleaned 1 is a position point of the upper left corner of the area to be cleaned or the sub-area to be cleaned 1, and a first cleaning starting point of the area to be cleaned or the sub-area to be cleaned 2 is a position point of the lower right corner of the area to be cleaned or the sub-area to be cleaned 2. When cleaning the area to be cleaned or the sub-area to be cleaned 1, the cleaning robot 100 advances downward from the upper left corner along the first cleaning path to perform a cleaning operation on the floor. When cleaning the area to be cleaned or the sub-area to be cleaned 2, the cleaning robot 100 advances upward from the lower right corner along the first cleaning path to perform a cleaning operation on the floor. Another point to be explained is that when a distance between two side edges of the target cleaning area in a direction perpendicular to the cleaning direction is equal to the body width, the cleaning robot 100 can move directly upward from the bottom most of the target cleaning area to perform a cleaning operation on the floor of the target cleaning area.

For example, referring to Fig. 31, the lower left corner of the area to be cleaned or the sub-area to be cleaned includes an obstacle or a cleaned area, thereby a target cleaning area is generated at the lower right corner of the area to be cleaned or the sub-area to be cleaned. A distance between the two sides of the target cleaning area is equal to the body width of the cleaning robot 100. When cleaning the target cleaning area, the cleaning robot 100 moves upward directly from the bottom most of the target cleaning area to perform a cleaning operation on the floor of the target cleaning area.

**In** this way, when the distance between the two sides of the target cleaning area in the direction perpendicular to the cleaning direction is less than or equal to the first preset distance value, the cleaning trajectory of the cleaning robot 100 is neither advancing in the cleaning direction nor turning back in the direction perpendicular to the cleaning direction, thereby preventing the trajectory of the cleaning robot 100 from oscillating back and forth frequently.

**In** one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

**In** another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 10

This embodiment of the present invention provides a cleaning control method, which is executed when cleaning an unknown area to be cleaned or an unknown sub-area by a cleaning robot 100, where the cleaning robot 100 is used in conjunction with a base station, the base station is a cleaning device used by the cleaning robot 100, the area to be cleaned or the sub-area to be cleaned includes an entrance edge, the cleaning robot 100 performs a cleaning operation according to a set cleaning direction, and the cleaning direction is a direction pointing from inside of the area to be cleaned or the sub-area to be cleaned to the entrance edge. Referring to Fig. 32, the method includes:
Operation S3201: the cleaning robot 100 acquiring an area map, where the area map is configured to represent the area to be cleaned or the sub-area to be cleaned in the area to be cleaned, and the sub-area to be cleaned is an uncleaned area in the area to be cleaned.

Operation S3202: based on the area map, the cleaning robot 100 starting from a current position of the cleaning robot 100 in the area to be cleaned or the sub-area to be cleaned, and scanning the area to be cleaned for a first uncleaned point in a direction opposite to the cleaning direction in a form of scanning lines, the scanning lines being perpendicular to the cleaning direction, and the first uncleaned point being an uncleaned point farthest from the current position in the cleaning direction.

Operation S3203: the cleaning robot 100 determining a first cleaning starting point of the area to be cleaned or the sub-area to be cleaned based on the first uncleaned point.

The above operations S3201-S3203 are the same as the operations S1401-S1403 and will not be described here.

Operation S3204: when a portion of the area to be cleaned or the sub-area to be cleaned has been cleaned, the cleaning robot 100 taking a portion of an uncleaned area of the area to be cleaned or the sub-area to be cleaned as a target cleaning area, when a distance between two edges of the target cleaning area in a direction perpendicular to the cleaning direction is not greater than a second preset distance value, the cleaning robot 100 moving to an edge of the target cleaning area from the first cleaning starting point, and then moving along a second cleaning path to perform a cleaning operation on the floor in the target cleaning area. The second cleaning path is a path gradually advancing in a direction perpendicular to the cleaning direction and turning back and forth in a direction parallel to the cleaning direction.

This operation is the same as operation 2805 and will not be repeated here.

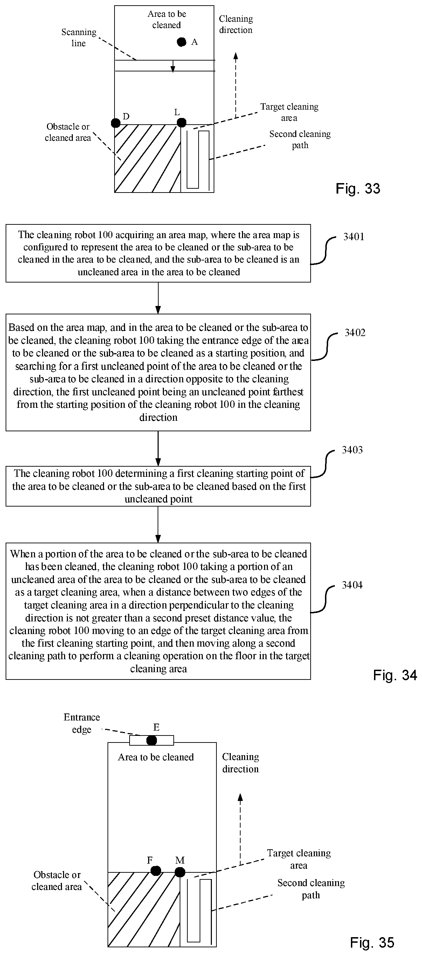

For example, referring to Fig. 33, the target cleaning area is an area on the right of an obstacle or the cleaned area, point A is the current position of the cleaning robot 100, and point D is the first cleaning starting point. The cleaning robot 100 moves from point D to point L, and moves along the second cleaning path to perform a cleaning operation on the floor in the target cleaning area from point L.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 11

This embodiment of the present invention provides a cleaning control method, which is executed when cleaning an unknown area to be cleaned or an unknown sub-area by a cleaning robot 100, where the cleaning robot 100 is used in conjunction with a base station, the base station is a cleaning device used by the cleaning robot 100, the area to be cleaned or the sub-area to be cleaned includes an entrance edge, the cleaning robot 100 performs a cleaning operation according to a set cleaning direction, and the cleaning direction is a direction pointing from inside of the area to be cleaned or the sub-area to be cleaned to the entrance edge. Referring to Fig. 34, the method includes:
Operation 3401: the cleaning robot 100 acquiring an area map, where the area map is configured to represent the area to be cleaned or the sub-area to be cleaned in the area to be cleaned, and the sub-area to be cleaned is an uncleaned area in the area to be cleaned.

Operation 3402: based on the area map, and in the area to be cleaned or the sub-area to be cleaned, the cleaning robot 100 taking the entrance edge of the area to be cleaned or the sub-area to be cleaned as a starting position, and searching for a first uncleaned point of the area to be cleaned or the sub-area to be cleaned in a direction opposite to the cleaning direction, the first uncleaned point being an uncleaned point farthest from the starting position of the cleaning robot 100 in the cleaning direction.

Operation S3403: the cleaning robot 100 determining a first cleaning starting point of the area to be cleaned or the sub-area to be cleaned based on the first uncleaned point.

The above operations S3401-S3403 are the same as operations S1601-S1603 and will not be described here.

Operation S3404: when a portion of the area to be cleaned or the sub-area to be cleaned has been cleaned, the cleaning robot 100 taking a portion of an uncleaned area of the area to be cleaned or the sub-area to be cleaned as a target cleaning area, when a distance between two edges of the target cleaning area in a direction perpendicular to the cleaning direction is not greater than a second preset distance value, the cleaning robot 100 moving to an edge of the target cleaning area from the first cleaning starting point, and then moving along a second cleaning path to perform a cleaning operation on the floor in the target cleaning area.

The second cleaning path is a path gradually advancing in a direction perpendicular to the cleaning direction and turning back and forth in a direction parallel to the cleaning direction. This operation is the same as operation 2805 and will not be described here.

For example, referring to Fig. 35, the target cleaning area is an area on the right of an obstacle or the cleaned area, point E is the starting position of the cleaning robot 100, and point F is the first cleaning starting point. The cleaning robot 100 moves from point F to point M, and, moves along the second cleaning path from point M to perform a cleaning operation on the floor in the target cleaning area.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 12

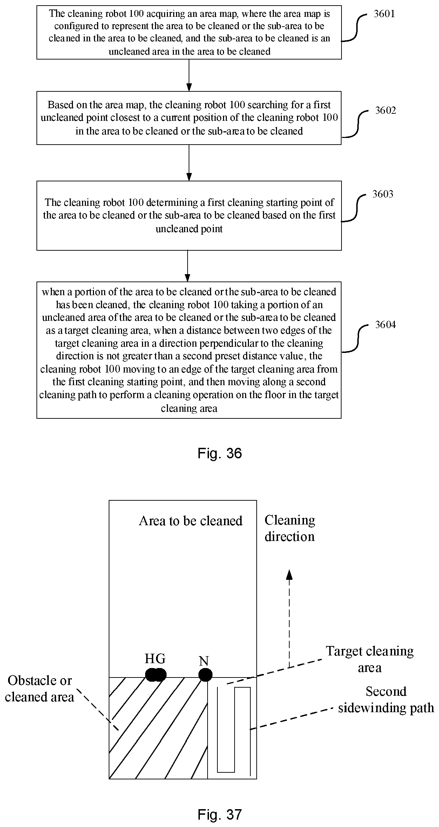

This embodiment of the present invention provides a cleaning control method, which is executed when cleaning an unknown area to be cleaned or an unknown sub-area by a cleaning robot 100, where the cleaning robot 100 is used in conjunction with a base station, the base station is a cleaning device used by the cleaning robot 100, the area to be cleaned or the sub-area to be cleaned includes an entrance edge, the cleaning robot 100 performs a cleaning operation according to a set cleaning direction, and the cleaning direction is a direction pointing from inside of the area to be cleaned or the sub-area to be cleaned to the entrance edge. Referring to Fig. 36, the method includes:
Operation S3601: the cleaning robot 100 acquiring an area map, where the area map is configured to represent the area to be cleaned or the sub-area to be cleaned in the area to be cleaned, and the sub-area to be cleaned is an uncleaned area in the area to be cleaned.

Operation S3602: based on the area map, the cleaning robot 100 searching for a first uncleaned point closest to a current position of the cleaning robot 100 in the area to be cleaned or the sub-area to be cleaned.

Operation S3603: the cleaning robot 100 determining a first cleaning starting point of the area to be cleaned or the sub-area to be cleaned based on the first uncleaned point.

The above operations S3601-S3603 are the same as operations S1801-S1803 and will not be described here.

Operation S3604: when a portion of the area to be cleaned or the sub-area to be cleaned has been cleaned, the cleaning robot 100 taking a portion of an uncleaned area of the area to be cleaned or the sub-area to be cleaned as a target cleaning area, when a distance between two edges of the target cleaning area in a direction perpendicular to the cleaning direction is not greater than a second preset distance value, the cleaning robot 100 moving to an edge of the target cleaning area from the first cleaning starting point, and then moving along a second cleaning path to perform a cleaning operation on the floor in the target cleaning area.

The second cleaning path is a path gradually advancing in a direction perpendicular to the cleaning direction and turning back and forth in a direction parallel to the cleaning direction. This operation is the same as operation 2805 and will not be described here.

For example, referring to Fig. 37, the target cleaning area is an area on the right of an obstacle or the cleaned area, point H is the starting position of the cleaning robot 100, and point G is the first cleaning starting point. The cleaning robot 100 moves from point G to point N, and moves along the second cleaning path from point N to perform a cleaning operation on the floor in the target cleaning area.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 13

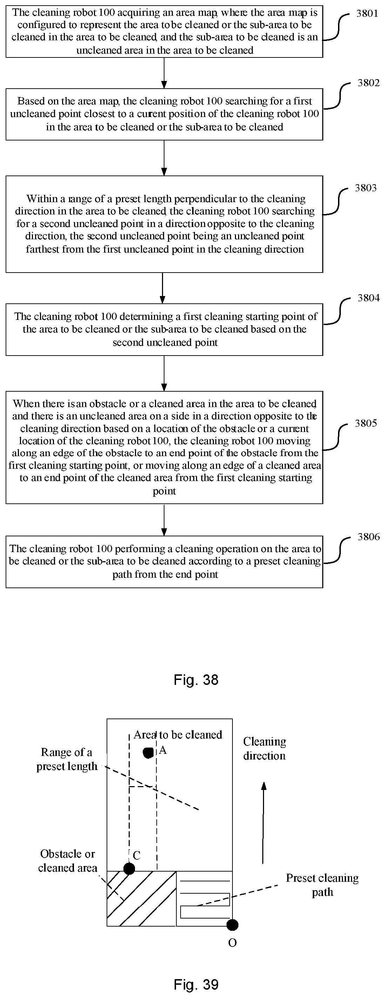

This embodiment of the present invention provides a cleaning control method, which is executed when cleaning an unknown area to be cleaned by a cleaning robot 100, where the cleaning robot 100 is used in conjunction with a base station, the base station is a cleaning device used by the cleaning robot 100, the area to be cleaned includes an entrance edge, the cleaning robot 100 performs a cleaning operation according to a set cleaning direction, and the cleaning direction is a direction pointing from inside of the area to be cleaned to the entrance edge. Referring to Fig. 38, the method includes:
Operation S3801: the cleaning robot 100 acquiring an area map, where the area map is configured to represent the area to be cleaned or the sub-area to be cleaned in the area to be cleaned, and the sub-area to be cleaned is an uncleaned area in the area to be cleaned.

Operation S3802: based on the area map, the cleaning robot 100 searching for a first uncleaned point closest to a current position of the cleaning robot 100 in the area to be cleaned or the sub-area to be cleaned.

Operation S3803: within a range of a preset length perpendicular to the cleaning direction in the area to be cleaned, the cleaning robot 100 searching for a second uncleaned point in a direction opposite to the cleaning direction, the second uncleaned point being an uncleaned point farthest from the first uncleaned point in the cleaning direction.

Operation S3804: the cleaning robot 100 determining a first cleaning starting point of the area to be cleaned or the sub-area to be cleaned based on the second uncleaned point.

The above operations S3801-S3804 are the same as operations S1201-S1204 and will not be described here.

Operation S3805: when there is an obstacle or a cleaned area in the area to be cleaned, and there is an uncleaned area on a side in a direction opposite to the cleaning direction based on a location of the obstacle or a current location of the cleaning robot 100, the cleaning robot 100 moving along an edge of the obstacle to an end point of the obstacle from the first cleaning starting point, or moving along an edge of a cleaned area to an end point of the cleaned area from the first cleaning starting point.

Operation S3806: the cleaning robot 100 performing a cleaning operation on the area to be cleaned or the sub-area to be cleaned according to a preset cleaning path from the end point.

The process of the cleaning robot 100 performing the cleaning operation on the area to be cleaned or the sub-area to be cleaned along the preset cleaning path from the end point is similar to operation of the cleaning robot 100 performing the cleaning operation on the area to be cleaned or the sub-area to be cleaned along the preset cleaning path from the first cleaning starting point, and will not be repeated here.

For example, referring to Fig. 39, A is the current position of the cleaning robot 100, C is the first cleaning starting point, and O is the end point. The cleaning robot 100 moves from point C to point O, and performs the cleaning operation on the area to be cleaned or the sub-area to be cleaned from point O.

Another point to be explained is that, the cleaning method of the cleaning robot 100 performing the cleaning operation on the floor of the area to be cleaned or the sub-area to be cleaned may be that: the cleaning component of the cleaning robot 100 is in contact with the floor, the cleaning robot 100 is driven by the driving device to move, and the cleaning component moves relative to the floor. The cleaning component may move relative to the floor with the movement of the cleaning robot 100, or the cleaning component itself may rotate, that is, the cleaning component rotates relative to the floor, so that the cleaning component and the floor slide cross each other, or the cleaning component itself may rotate while the cleaning robot 100 moves.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 14

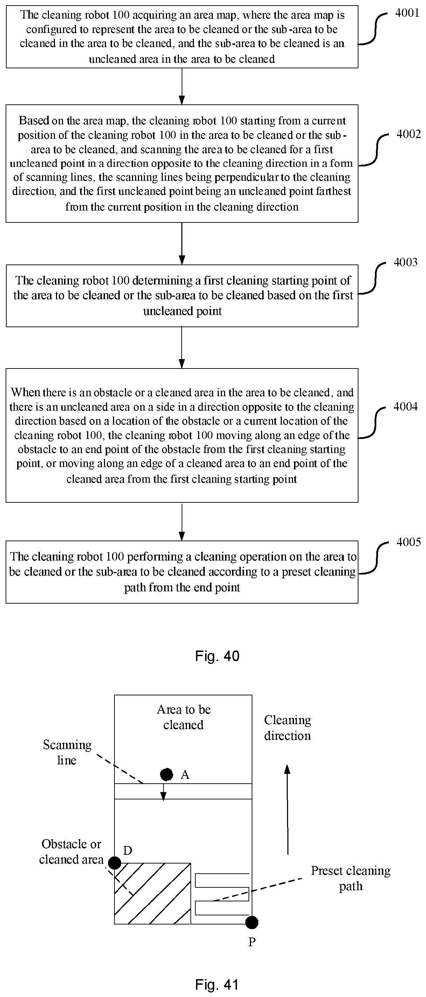

This embodiment of the present invention provides a cleaning control method, which is executed when cleaning an unknown area to be cleaned by a cleaning robot 100, where the cleaning robot 100 is used in conjunction with a base station, the base station is a cleaning device used by the cleaning robot 100, the area to be cleaned includes an entrance edge, the cleaning robot 100 performs a cleaning operation according to a set cleaning direction, and the cleaning direction is a direction pointing from inside of the area to be cleaned to the entrance edge. Referring to Fig. 40, the method includes:
Operation S4001: the cleaning robot 100 acquiring an area map, where the area map is configured to represent the area to be cleaned or the sub-area to be cleaned in the area to be cleaned, and the sub-area to be cleaned is an uncleaned area in the area to be cleaned.

Operation S4002: based on the area map, the cleaning robot 100 starting from a current position of the cleaning robot 100 in the area to be cleaned or the sub-area to be cleaned, and scanning the area to be cleaned for a first uncleaned point in a direction opposite to the cleaning direction in a form of scanning lines, the scanning lines being perpendicular to the cleaning direction, and the first uncleaned point being an uncleaned point farthest from the current position in the cleaning direction.

Operation S4003: the cleaning robot 100 determining a first cleaning starting point of the area to be cleaned or the sub-area to be cleaned based on the first uncleaned point.

The above operations S4001-S4003 are the same as operations S1401-S1403 and will not be described here.

Operation S4004: when there is an obstacle or a cleaned area in the area to be cleaned, and there is an uncleaned area on a side in a direction opposite to the cleaning direction based on a location of the obstacle or a current location of the cleaning robot 100, the cleaning robot 100 moving along an edge of the obstacle to an end point of the obstacle from the first cleaning starting point, or moving along an edge of a cleaned area to an end point of the cleaned area from the first cleaning starting point.

Operation S4005: the cleaning robot 100 performing a cleaning operation on the area to be cleaned or the sub-area to be cleaned according to a preset cleaning path from the end point.

The above operations S4004-S4005 are the same to operations S3805-S3806 and will not be repeated here.

Referring to Fig. 41, A is the current position of the cleaning robot 100, D is the first cleaning starting point, and P is the end point. The cleaning robot 100 moves from point D to point P, from which the cleaning operation is performed on the area to be cleaned or the sub-area to be cleaned.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 15

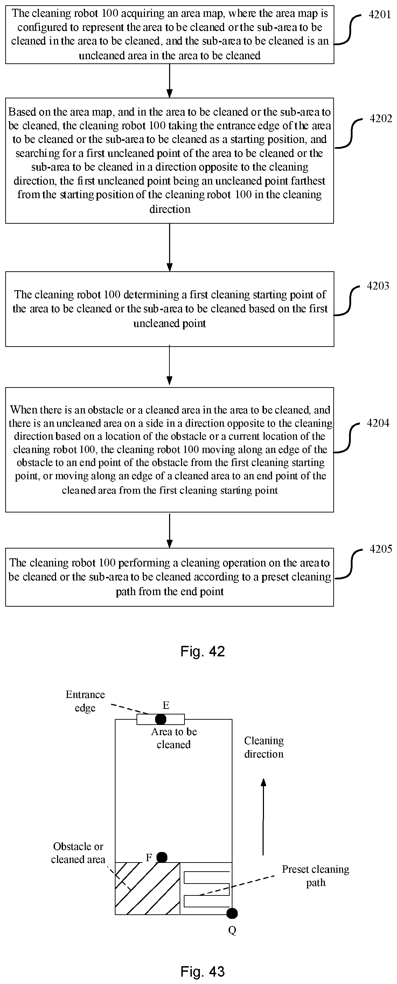

This embodiment of the present invention provides a cleaning control method, which is executed when cleaning an unknown area to be cleaned by a cleaning robot 100, where the cleaning robot 100 is used in conjunction with a base station, the base station is a cleaning device used by the cleaning robot 100, the area to be cleaned includes an entrance edge, the cleaning robot 100 performs a cleaning operation according to a set cleaning direction, and the cleaning direction is a direction pointing from inside of the area to be cleaned to the entrance edge. Referring to Fig. 42, the method includes:
Operation S4201: the cleaning robot 100 acquiring an area map, where the area map is configured to represent the area to be cleaned or the sub-area to be cleaned in the area to be cleaned, and the sub-area to be cleaned is an uncleaned area in the area to be cleaned.

Operation S4202: based on the area map, and in the area to be cleaned or the sub-area to be cleaned, the cleaning robot 100 taking the entrance edge of the area to be cleaned or the sub-area to be cleaned as a starting position, and searching for a first uncleaned point of the area to be cleaned or the sub-area to be cleaned in a direction opposite to the cleaning direction, the first uncleaned point being an uncleaned point farthest from the starting position of the cleaning robot 100 in the cleaning direction.

Operation S4203: the cleaning robot 100 determining a first cleaning starting point of the area to be cleaned or the sub-area to be cleaned based on the first uncleaned point.

The above operations S4201-S4203 are the same as operations S1601-S1603 and will not be described here.

Operation S4204: when there is an obstacle or a cleaned area in the area to be cleaned, and there is an uncleaned area on a side in a direction opposite to the cleaning direction based on a location of the obstacle or a current location of the cleaning robot 100, the cleaning robot 100 moving along an edge of the obstacle to an end point of the obstacle from the first cleaning starting point, or moving along an edge of a cleaned area to an end point of the cleaned area from the first cleaning starting point.

Operation S4205: the cleaning robot 100 performing a cleaning operation on the area to be cleaned or the sub-area to be cleaned according to a preset cleaning path from the end point.

The above operations S4204-S4205 are the same to operations S3805-S3806 and will not be repeated here.

For example, referring to Fig. 43, E is the starting position of the cleaning robot 100, F is the first cleaning starting point, and Q is the end point. The cleaning robot 100 moves from point F to point Q, from which the cleaning operation is performed on the area to be cleaned or the sub-area to be cleaned.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 16

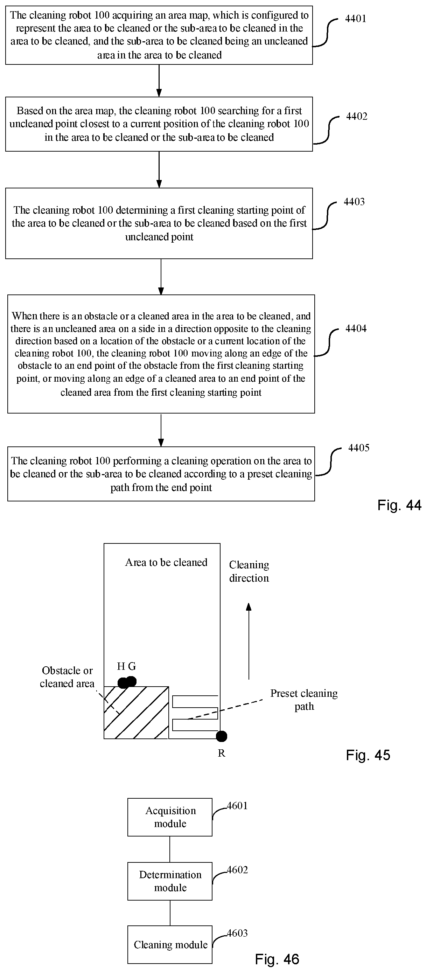

This embodiment of the present invention provides a cleaning control method, which is executed when cleaning an unknown area to be cleaned by a cleaning robot 100, where the cleaning robot 100 is used in conjunction with a base station, the base station is a cleaning device used by the cleaning robot 100, the area to be cleaned includes an entrance edge, the cleaning robot 100 performs a cleaning operation according to a set cleaning direction, and the cleaning direction is a direction pointing from inside of the area to be cleaned to the entrance edge. Referring to Fig. 44, the method includes:
Operation S4401: the cleaning robot 100 acquiring an area map, where the area map is configured to represent the area to be cleaned or the sub-area to be cleaned in the area to be cleaned, and the sub-area to be cleaned is an uncleaned area in the area to be cleaned.

Operation S4402: based on the area map, the cleaning robot 100 searching for a first uncleaned point closest to a current position of the cleaning robot 100 in the area to be cleaned or the sub-area to be cleaned.

Operation S4403: the cleaning robot 100 determining a first cleaning starting point of the area to be cleaned or the sub-area to be cleaned based on the first uncleaned point.

The above operations S4401-S4403 are the same as operations S1801-S1803 and will not be described here.

Operation S4404: when there is an obstacle or a cleaned area in the area to be cleaned, and there is an uncleaned area on a side in a direction opposite to the cleaning direction based on a location of the obstacle or a current location of the cleaning robot 100, the cleaning robot 100 moving along an edge of the obstacle to an end point of the obstacle from the first cleaning starting point, or moving along an edge of a cleaned area to an end point of the cleaned area from the first cleaning starting point.

Operation S4405: the cleaning robot 100 performing a cleaning operation on the area to be cleaned or the sub-area to be cleaned according to a preset cleaning path from the end point.

The above operations S4404-S4405 are the same to operations S3805-S3806 and will not be repeated here.

For example, referring to Fig. 45, H is the starting position of the cleaning robot 100, G is the first cleaning starting point, and R is the end point. The cleaning robot 100 moves from point G to point R, from which the cleaning operation is performed on the area to be cleaned or the sub-area to be cleaned.

In one possible implementation, when the cleaning robot 100 encounters an obstacle during cleaning, the cleaning robot 100 stops cleaning and then re-determines a first cleaning starting point of the uncleaned area based on the uncleaned area in the area to be cleaned or the sub-area to be cleaned; and executes a cleaning operation on the uncleaned area from the re-determined first cleaning starting point.

In another possible implementation, when the cleaning robot 100 encounters an obstacle during cleaning, the cleaning robot 100 makes a circle around the obstacle and then re-determines a first cleaning starting point of the uncleaned area based on the uncleaned area in the area to be cleaned or the sub-area to be cleaned; and executes a cleaning operation on the uncleaned area from the re-determined first cleaning starting point.

The cleaning robot 100 makes a circle around the obstacle to determine the area where the obstacle is located, removes cleaned areas and the area where the obstacle is located from the area to be cleaned or the sub-area to be cleaned, and obtains the uncleaned area in the area to be cleaned or the sub-area to be cleaned.

In embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 17

The embodiments of the present invention provide a cleaning control device, referring to Fig. 46, which is applied to a cleaning robot 100 cleaning an unknown area to be cleaned. The cleaning robot 100 is used in conjunction with a base station 200. The base station 200 is a cleaning device used by the cleaning robot 100. The area to be cleaned is provided with an entrance edge. The cleaning robot 100 performs a cleaning operation according to a set cleaning direction, and the cleaning direction is a direction from inside of the area to be cleaned to the entrance edge. The cleaning control device comprises:
An acquisition module 4601 for acquiring an area map, where the area map is configured to represent the area to be cleaned or a sub-area to be cleaned in the area to be cleaned, and the sub-area to be cleaned is an uncleaned area in the area to be cleaned;

A determination module 4602 for determining a first cleaning starting point of the area to be cleaned or the sub-area to be cleaned based on the area map, the first cleaning starting point being a point on an edge of the area to be cleaned or the sub-area to be cleaned opposite to the cleaning direction;
a cleaning module 4603 for performing a cleaning operation on the area to be cleaned or the sub-area to be cleaned from the first cleaning starting point.

In one possible implementation, the determination module 4602 is also for searching for a first uncleaned point closest to a current location of the cleaning robot in the area to be cleaned based on the area map; searching for a second uncleaned point of the area to be cleaned or the sub-area to be cleaned in a direction opposite to the cleaning direction, within a range of a preset length perpendicular to the cleaning direction in the area to be cleaned; and determining the first cleaning starting point of the area to be cleaned or the sub-area to be cleaned based on the second uncleaned point, the second uncleaned point being an uncleaned point farthest from the first uncleaned point in the cleaning direction.

In another possible implementation, the determination module 4602 is for starting from a current position of the cleaning robot 100 in the area to be cleaned or the sub-area to be cleaned, and scanning the area to be cleaned based on the area map for a first uncleaned point in a direction opposite to the cleaning direction in a form of scanning lines, and determining a first cleaning starting point based on the first uncleaned point, the scanning lines being perpendicular to the cleaning direction, the first uncleaned point being an uncleaned point farthest from the current position in the cleaning direction.

**In** another possible implementation, the determination module 4602 is for: based on the area map, and in the area to be cleaned or the sub-area to be cleaned, taking the entrance edge of the area to be cleaned or the sub-area to be cleaned as a starting position, searching for a first uncleaned point of the area to be cleaned or the sub-area to be cleaned in a direction opposite to the cleaning direction, and determining a first cleaning starting point of the area to be cleaned or the sub-area to be cleaned based on the first uncleaned point.

**In** another possible implementation, the determination module 4602 is further for: based on the area map, and in the area to be cleaned or the sub-area to be cleaned, searching out a first uncleaned point closest to a current location of the cleaning robot; and determining a first cleaning starting point of the area to be cleaned or the sub-area to be cleaned based on the first uncleaned point.

**In** another possible implementation, the determination module 4602 is further for: taking the first uncleaned point as the first cleaning starting point for the area to be cleaned or the sub-area to be cleaned; or, the determination module 4602 is further for: moving to an end point of an edge where the first uncleaned point is located when there is an uncleaned point on the edge, and taking the end point of the edge as the first cleaning starting point of the area to be cleaned or the sub-area to be cleaned.

**In** another possible implementation, the determination module 4602 is further for: taking the second uncleaned point as the first cleaning starting point for the area to be cleaned or the sub-area to be cleaned; or, the determination module 4602 is further for: moving to an end point of an edge where the second uncleaned point is located when there is an uncleaned point on the edge, and taking the end point of the edge as the first cleaning starting point of the area to be cleaned or the sub-area to be cleaned.

**In** another possible implementation, the cleaning module 4603 is also for: performing a cleaning operation on the area to be cleaned or the sub-area to be cleaned from the first cleaning starting point according to a preset cleaning path.

**In** another possible implementation, the device further comprises:
a judgment module for judging whether the preset cleaning path is ended, and judging that the preset cleaning path is ended includes that: when encountering an obstacle or power of the cleaning robot reaching a threshold value, the cleaning robot needs to return to the base station for charging or for cleaning the cleaning component.

The determination module 4602 is further for: re-searching for a first cleaning starting point of the area to be cleaned or the sub-area to be cleaned based on the area map when the preset cleaning path is ended, and starting from the re-searched first cleaning starting point.

The cleaning module 4603 is further for: performing a cleaning operation on the area to be cleaned or the sub-area to be cleaned according to a preset cleaning path till all uncleaned areas of the area to be cleaned are cleaned.

In another possible implementation, the cleaning module 4603 is further for: taking a portion of an uncleaned area of the area to be cleaned or the sub-area to be cleaned as a target cleaning area, when a portion of the area to be cleaned or the sub-area to be cleaned has been cleaned, moving to an edge of the target cleaning area from the first cleaning starting point, and then moving along a first cleaning path to perform a cleaning operation on the floor in the target cleaning area, when a distance between two edges of the target cleaning area in a direction perpendicular to the cleaning direction is greater than a preset distance value.

The first cleaning path is a path gradually advancing in the direction of the cleaning direction and turning back and forth in a direction perpendicular to the cleaning direction.

In another possible implementation, the cleaning module 4603 is further for: taking a portion of an uncleaned area of the area to be cleaned or the sub-area to be cleaned as a target cleaning area, when a portion of the area to be cleaned or the sub-area to be cleaned has been cleaned, moving to an edge of the target cleaning area, from the first cleaning starting point and then moving along a second cleaning path to perform a cleaning operation on the floor in the target cleaning area, when a distance between two edges of the target cleaning area in a direction perpendicular to the cleaning direction is not greater than a preset distance value.

The second cleaning path is a path gradually advancing in the direction perpendicular to the cleaning direction and turning back and forth in a direction parallel to the cleaning direction.

In another possible implementation, the cleaning module 4603 is further for: when there is an obstacle in the area to be cleaned or the sub-area to be cleaned or a portion of the area to be cleaned or the sub-area to be cleaned has been cleaned, based on that there is an uncleaned area on a side of a location of the obstacle or a current location of the cleaning robot in a direction opposite to the cleaning direction, moving from the first cleaning starting point along an edge of the obstacle to an end point of the obstacle, or moving from the first cleaning starting point along an edge of a cleaned area to an end point of the cleaned area; and
performing a cleaning operation on the area to be cleaned or the sub-area to be cleaned according to a preset cleaning path from the end point.

In another possible implementation, when the cleaning robot encounters an obstacle during cleaning, the cleaning control device further includes:
a stop module for stopping cleaning when the cleaning robot encounters an obstacle during the cleaning;
The determination module is further for re-determining a first cleaning starting point of an uncleaned area based on the uncleaned area of the area to be cleaned or the sub-area to be cleaned;
The cleaning module 4603 is further for performing a cleaning operation on the uncleaned area from the re-determined first cleaning starting point.

In another possible implementation, when the cleaning robot encounters an obstacle during cleaning, the cleaning control device further includes:
a surrounding module for making a circle around an obstacle when the cleaning robot encounters the obstacle during the cleaning;
The determination module is further for re-determining a first cleaning starting point of an uncleaned area based on the uncleaned area in the area to be cleaned or the sub-area to be cleaned;
The cleaning module 4603 is further for performing a cleaning operation on the uncleaned area from the re-determined first cleaning starting point.

In another possible implementation, the cleaning robot is provided with a cleaning component for the cleaning robot to perform a cleaning operation on the floor.

The cleaning component is a mopping module or a sweeping module, the mopping module is for mopping and cleaning the floor, and the sweeping module is for sweeping and cleaning the floor.

In the embodiments of the present invention, when the cleaning robot 100 cleans the area to be cleaned or the sub-area to be cleaned, the cleaning robot 100 determines a first cleaning starting point of the area to be cleaned or sub-area to be cleaned. The first cleaning starting point is a point on an edge of the area to be cleaned or the sub-area to be cleaned opposite to the cleaning direction, and the cleaning direction is a direction pointing to an entrance edge from inside of the area to be cleaned or the sub-area to be cleaned. A cleaning operation is executed on the area to be cleaned or the sub-area to be cleaned from the first cleaning starting point. Therefore, cleaning from an inner end of the area to be cleaned or the sub-area to be cleaned to the entrance edge is realized, the cleaned floor are prevented from being polluted by the dirty cleaning component, and the cleaning efficiency is improved.

### Embodiment 18

The embodiments of the present invention further provides a computer-readable storage medium, which is applied to the cleaning robot 100, at least one instruction, at least one program, a code set or an instruction set is stored on the computer-readable storage medium and loaded and executed by a processor to implement the operations performed in the cleaning control method according to the foregoing embodiments.

Those of ordinary skill in the art can understand that all or part of the operations in the foregoing embodiments can be implemented by hardware, or can be implemented by a program instructing relevant hardware. The program can be stored in a computer-readable storage medium, and the storage medium mentioned can be a read-only memory, a magnetic disk or an optical disk, etc.

The above description is only for the convenience of those skilled in the art to understand the technical solutions of the present invention, and is not used to control the present invention. Any modification, equivalent replacement, improvement, etc., made within the spirit and principle of the present invention shall be included in the protection scope of the present invention.

## Claims

1. A cleaning control method, applied to be executed by a cleaning robot when cleans an unknown area to be cleaned, wherein the cleaning robot is used in conjunction with a base station, the base station is a cleaning device used by the cleaning robot, the area to be cleaned includes an entrance edge, the cleaning robot is configured to perform a cleaning operation according to a set cleaning direction, and the set cleaning direction is a direction pointing from inside of the area to be cleaned to the entrance edge, and **characterized in that** the cleaning control method comprises:
operation S1, acquiring an area map, wherein the area map is configured to represent the area to be cleaned or a sub-area to be cleaned in the area to be cleaned, and the sub-area to be cleaned is an uncleaned area in the area to be cleaned;
operation S2, determining a first cleaning starting point of the area to be cleaned or the sub-area to be cleaned based on the area map, wherein the first cleaning starting point is a point on an edge of the area to be cleaned or the sub-area to be cleaned opposite to the cleaning direction; and
operation S3, performing a cleaning operation on the area to be cleaned or the sub-area to be cleaned from the first cleaning starting point after moving to the first cleaning starting point.

2. The method of claim 1, wherein the operation S2: determining a first cleaning starting point of the area to be cleaned or the sub-area to be cleaned based on the area map, comprises:
operation S21, searching for a first uncleaned point closest to a current position of the cleaning robot in the area to be cleaned based on the area map;
operation S22, searching for a second uncleaned point of the area to be cleaned or the sub-area to be cleaned in a direction opposite to the cleaning direction within a range of a preset length perpendicular to the cleaning direction in the area to be cleaned, wherein the second uncleaned point is an uncleaned point farthest from the first uncleaned point in the cleaning direction; and
operation S23, determining the first cleaning starting point of the area to be cleaned or the sub-area to be cleaned based on the second uncleaned point.

3. The method of claim 1, wherein the operation S2: determining a first cleaning starting point of the area to be cleaned or the sub-area to be cleaned based on the area map, comprises:
operation S201, based on the area map, in the area to be cleaned or the sub-area to be cleaned, starting from a current position of the cleaning robot, and scanning the area to be cleaned or the sub-area to be cleaned in a direction opposite to the cleaning direction in a form of scanning lines to search for a first uncleaned point, wherein the scanning lines are perpendicular to the cleaning direction, and the first uncleaned point is an uncleaned point farthest from the current position in the cleaning direction; and
operation S202, determining the first cleaning starting point of the area to be cleaned or the sub-area to be cleaned based on the first uncleaned point.

4. The method of claim 1, wherein the operation S2: determining a first cleaning starting point of the area to be cleaned or the sub-area to be cleaned based on the area map, comprises:
operation S211, based on the area map, in the area to be cleaned or the sub-area to be cleaned, taking an entrance edge of the area to be cleaned or the sub-area to be cleaned as a starting position of the cleaning robot, and searching for a first uncleaned point of the area to be cleaned or the sub-area to be cleaned in a direction opposite to the cleaning direction, wherein the first uncleaned point is an uncleaned point farthest from the starting position in the cleaning direction; and
operation S212, determining the first cleaning starting point of the area to be cleaned or the sub-area to be cleaned based on the first uncleaned point.

5. The method of any one of claims 3 to 4, wherein the operation of determining the first cleaning starting point of the area to be cleaned or the sub-area to be cleaned based on the first uncleaned point comprises:
taking the first uncleaned point as the first cleaning starting point of the area to be cleaned or the sub-area to be cleaned; or,
when there is an uncleaned point on an edge where the first uncleaned point is located, moving to an end point of the edge, and taking the end point of the edge as the first cleaning starting point of the area to be cleaned or the sub-area to be cleaned.

6. The method of claim 2, wherein the operation S23: determining the first cleaning starting point of the area to be cleaned or the sub-area to be cleaned based on the second uncleaned point, comprises:
taking the second uncleaned point as the first cleaning starting point of the area to be cleaned or the sub-area to be cleaned; or,
when there is an uncleaned point on an edge where the second uncleaned point is located, moving to an end point of the edge, and taking the end point of the edge as the first cleaning starting point of the area to be cleaned or the sub-area to be cleaned.

7. The method of claim 1, wherein the operation S3: performing a cleaning operation on the area to be cleaned or the sub-area to be cleaned from the first cleaning starting point, comprises:
performing the cleaning operation on the area to be cleaned or the sub-area to be cleaned according to a preset cleaning path from the first cleaning starting point.

8. The method of claim 7, wherein after operation S3, the method further comprises:
operation S4, judging whether the preset cleaning path is ended, wherein the operation for judging the preset cleaning path is ended comprises: encountering an obstacle, or power of the cleaning robot reaching a threshold value and the cleaning robot needing to return to the base station for charging, or the cleaning robot needing to return to the base station for cleaning a cleaning component; and
operation S5, when the preset cleaning path is ended, based on the area map, re-searching for a first cleaning starting point of the area to be cleaned or the sub-area to be cleaned, performing a cleaning operation on the area to be cleaned or the sub-area to be cleaned according to a preset cleaning path from the re-searched first cleaning starting point till all uncleaned areas of the area to be cleaned are cleaned.

9. The method of claim 7, wherein performing a cleaning operation on the area to be cleaned or the sub-area to be cleaned according to a preset cleaning path from the first cleaning starting point, comprises:
taking a portion of an uncleaned area of the area to be cleaned or the sub-area to be cleaned as a target cleaning area when a portion of the area to be cleaned or the sub-area to be cleaned has been cleaned, and when a distance between two edges of the target cleaning area in a direction perpendicular to the cleaning direction is greater than a preset distance value, moving to an edge of the target cleaning area from the first cleaning starting point, and then moving along a first cleaning path to perform a cleaning operation on a floor in the target cleaning area;
wherein the first cleaning path is a path gradually advancing in the cleaning direction and turning back and forth in a direction perpendicular to the cleaning direction.

10. The method of claim 7, wherein performing a cleaning operation on the area to be cleaned or the sub-area to be cleaned according to a preset cleaning path from the first cleaning starting point, comprises:
taking a portion of an uncleaned area of the area to be cleaned or the sub-area to be cleaned as a target cleaning area when a portion of the area to be cleaned or the sub-area to be cleaned has been cleaned, and when a distance between two edges of the target cleaning area in a direction perpendicular to the cleaning direction is less than or equal to a preset distance value, moving to an edge of the target cleaning area from the first cleaning starting point, and then moving along a second cleaning path to perform a cleaning operation on a floor in the target cleaning area;
wherein the second cleaning path is a path gradually advancing in a direction perpendicular to the cleaning direction and turning back and forth in a direction parallel to the cleaning direction.

11. The method of claim 7, wherein performing a cleaning operation on the area to be cleaned or the sub-area to be cleaned according to a preset cleaning path from the first cleaning starting point, comprises:
when there is an obstacle or a cleaned area in the area to be cleaned or the sub-area to be cleaned, and there is an uncleaned area on a side in a direction opposite to the cleaning direction based on a location of the obstacle or a current location of the cleaning robot, moving along an edge of the obstacle to an end point of the obstacle from the first cleaning starting point, or moving along an edge of the cleaned area to an end point of the cleaned area from the first cleaning starting point; and
performing the cleaning operation on the area to be cleaned or the sub-area to be cleaned according to the preset cleaning path from the end point.

12. The method of any one of claims 1 to 4 or 6 to 9, wherein the cleaning control method further comprises:
operation S301, stopping cleaning when the cleaning robot encounters an obstacle in the cleaning process, and then repeating operation S2 to re-determine a first cleaning starting point of an uncleaned area based on the uncleaned area of the area to be cleaned or the sub-area to be cleaned; and
operation S302, performing the cleaning operation on the uncleaned area from the re-determined first cleaning starting point.

13. The method of any one of claims 1 to 4 or 6 to 9, wherein the cleaning control method further comprises:
operation S311, making a circle around an obstacle when the cleaning robot encounters the obstacle in the cleaning process, and then repeating operation S2 to re-determine a first cleaning starting point of an uncleaned area based on the uncleaned area of the area to be cleaned or the sub-area to be cleaned; and
operation S312, performing the cleaning operation on the uncleaned area from the re-determined first cleaning starting point.

14. A cleaning robot, **characterized by** comprising:
a processor and a memory (107) in which at least one instruction, at least one program, a code set, or an instruction set is stored, the at least one instruction, the at least one program, the code set, or the instruction set being loadable and executable by the processor to implement the operations of the cleaning control method of any one of claims 1 to 13.

15. A computer readable storage medium storing at least one instruction, at least one program, a code set or an instruction set, **characterized by** the at least one instruction, the at least one program, the code set or the instruction set being loadable and executable by a processor to implement the operations of the cleaning control method of any one of claims 1 to 13.

## Patentansprüche

1. Reinigungssteuerverfahren, das angewendet wird, um von einem Reinigungsroboter beim Reinigen eines unbekannten zu reinigenden Bereichs ausgeführt zu werden, wobei der Reinigungsroboter in Verbindung mit einer Basisstation verwendet wird, die Basisstation eine Reinigungsvorrichtung ist, die von dem Reinigungsroboter verwendet wird, der zu reinigende Bereich eine Eingangskante umfasst, der Reinigungsroboter dazu konfiguriert ist, einen Reinigungsvorgang gemäß einer vorbestimmten Reinigungsrichtung durchzuführen, und die vorbestimmte Reinigungsrichtung eine Richtung ist, die vom Inneren des zu reinigenden Bereichs zur Eingangskante zeigt, **dadurch gekennzeichnet, dass** das Reinigungssteuerverfahren Folgendes umfasst:
Schritt S1, Erfassen einer Bereichskarte, wobei die Bereichskarte so konfiguriert ist, dass sie den zu reinigenden Bereich oder einen zu reinigenden Teilbereich in dem zu reinigenden Bereich darstellt, und der zu reinigende Teilbereich ein ungereinigter Bereich in dem zu reinigenden Bereich ist;
Schritt S2, Bestimmen eines ersten Reinigungsstartpunkts des zu reinigenden Bereichs oder des zu reinigenden Teilbereichs basierend auf der Bereichskarte, wobei der erste Reinigungsstartpunkt ein Punkt an einer Kante des zu reinigenden Bereichs oder des zu reinigenden Teilbereichs entgegen der Reinigungsrichtung ist; und
Schritt S3, Durchführen eines Reinigungsvorgangs in dem zu reinigenden Bereich oder dem zu reinigenden Teilbereich ausgehend von dem ersten Reinigungsstartpunkt, nachdem der erste Reinigungsstartpunkt erreicht wurde.

2. Verfahren nach Anspruch 1, wobei der Schritt S2: Bestimmen eines ersten Reinigungsstartpunkts des zu reinigenden Bereichs oder des zu reinigenden Teilbereichs basierend auf der Bereichskarte, Folgendes umfasst:
Schritt S21, Suchen nach einem ersten ungereinigten Punkt, der einer aktuellen Position des Reinigungsroboters im zu reinigenden Bereich am nächsten liegt, basierend auf der Bereichskarte;
Schritt S22, Suchen nach einem zweiten ungereinigten Punkt des zu reinigenden Bereichs oder des zu reinigenden Teilbereichs in einer der Reinigungsrichtung entgegengesetzten Richtung innerhalb eines Bereichs einer voreingestellten Länge senkrecht zur Reinigungsrichtung im zu reinigenden Bereich, wobei der zweite ungereinigte Punkt der in der Reinigungsrichtung am weitesten vom ersten ungereinigten Punkt entfernte ungereinigte Punkt ist; und
Schritt S23, Bestimmen des ersten Reinigungsstartpunkts des zu reinigenden Bereichs oder des zu reinigenden Teilbereichs basierend auf dem zweiten ungereinigten Punkt.

3. Verfahren nach Anspruch 1, wobei der Schritt S2: Bestimmen eines ersten Reinigungsstartpunkts des zu reinigenden Bereichs oder des zu reinigenden Teilbereichs basierend auf der Bereichskarte, Folgendes umfasst:
Schritt S201, Ausgehen, basierend auf der Bereichskarte, von einer aktuellen Position des Reinigungsroboters in dem zu reinigenden Bereich oder dem zu reinigenden Teilbereich, und Scannen des zu reinigenden Bereichs oder des zu reinigenden Teilbereichs in einer der Reinigungsrichtung entgegengesetzten Richtung in Form von Scanlinien, um nach einem ersten ungereinigten Punkt zu suchen, wobei die Scanlinien senkrecht zur Reinigungsrichtung verlaufen und der erste ungereinigte Punkt der in der Reinigungsrichtung am weitesten von der aktuellen Position entfernte ungereinigte Punkt ist, und
Schritt S202, Bestimmen des ersten Reinigungsstartpunkts des zu reinigenden Bereichs oder des zu reinigenden Teilbereichs basierend auf dem ersten ungereinigten Punkt.

4. Verfahren nach Anspruch 1, wobei der Schritt S2: Bestimmen eines ersten Reinigungsstartpunkts des zu reinigenden Bereichs oder des zu reinigenden Teilbereichs basierend auf der Bereichskarte, Folgendes umfasst:
Schritt S211, Verwenden, basierend auf der Bereichskarte, einer Eingangskante des zu reinigenden Bereichs oder des zu reinigenden Teilbereichs als eine Startposition des Reinigungsroboters in dem zu reinigenden Bereich oder dem zu reinigenden Teilbereich, und Suchen nach einem ersten ungereinigten Punkt des zu reinigenden Bereichs oder des zu reinigenden Teilbereichs in einer der Reinigungsrichtung entgegengesetzten Richtung, wobei der erste ungereinigte Punkt der in der Reinigungsrichtung am weitesten von der Startposition entfernte ungereinigte Punkt ist, und
Schritt S212, Bestimmen des ersten Reinigungsstartpunkts des zu reinigenden Bereichs oder des zu reinigenden Teilbereichs basierend auf dem ersten ungereinigten Punkt.

5. Verfahren nach einem der Ansprüche 3 bis 4, wobei der Schritt des Bestimmens des ersten Reinigungsstartpunkts des zu reinigenden Bereichs oder des zu reinigenden Teilbereichs basierend auf dem ersten ungereinigten Punkt Folgendes umfasst:
Verwenden des ersten ungereinigten Punkts als ersten Reinigungsstartpunkt des zu reinigenden Bereichs oder des zu reinigenden Teilbereichs; oder,
wenn sich an einer Kante, an der sich der erste ungereinigte Punkt befindet, ein ungereinigter Punkt befindet, Fahren zu einem Endpunkt der Kante und Verwenden des Endpunkts der Kante als ersten Reinigungsstartpunkt des zu reinigenden Bereichs oder des zu reinigenden Teilbereichs.

6. Verfahren nach Anspruch 2, wobei der Schritt S23: Bestimmen des ersten Reinigungsstartpunkts des zu reinigenden Bereichs oder des zu reinigenden Teilbereichs basierend auf dem zweiten ungereinigten Punkt, Folgendes umfasst:
Verwenden des zweiten ungereinigten Punkts als ersten Reinigungsstartpunkt des zu reinigenden Bereichs oder des zu reinigenden Teilbereichs; oder,
wenn sich an einer Kante, an der sich der zweite ungereinigte Punkt befindet, ein ungereinigter Punkt befindet, Fahren zu einem Endpunkt der Kante und Verwenden des Endpunkts der Kante als ersten Reinigungsstartpunkt des zu reinigenden Bereichs oder des zu reinigenden Teilbereichs.

7. Verfahren nach Anspruch 1, wobei der Schritt S3: Durchführen eines Reinigungsvorgangs in dem zu reinigenden Bereich oder dem zu reinigenden Teilbereich ausgehend von dem ersten Reinigungsstartpunkt, Folgendes umfasst:
Durchführen des Reinigungsvorgangs in dem zu reinigenden Bereich oder dem zu reinigenden Teilbereich entsprechend einer voreingestellten Reinigungsroute ausgehend von dem ersten Reinigungsstartpunkt.

8. Verfahren nach Anspruch 7, wobei das Verfahren nach Schritt S3 ferner Folgendes umfasst:
Schritt S4, Beurteilen, ob die voreingestellte Reinigungsroute beendet ist, wobei der Schritt zum Beurteilen des Beendens der voreingestellten Reinigungsroute Folgendes umfasst: das Auftreffen auf ein Hindernis, oder das Erreichen eines Schwellenwerts der Leistung des Reinigungsroboters und die Notwendigkeit, dass der Reinigungsroboter zur Basisstation zurückkehrt, um sich aufzuladen, oder die Notwendigkeit, dass der Reinigungsroboter zur Basisstation zurückkehrt, um eine Reinigungskomponente zu reinigen; und
Schritt S5, erneutes Suchen nach einem ersten Reinigungsstartpunkt des zu reinigenden Bereichs oder des zu reinigenden Teilbereichs basierend auf der Bereichskarte, wenn die voreingestellte Reinigungsroute beendet ist, Durchführen eines Reinigungsvorgangs in dem zu reinigenden Bereich oder dem zu reinigenden Teilbereich entsprechend einer voreingestellten Reinigungsroute ausgehend von dem erneut gesuchten ersten Reinigungsstartpunkt, bis alle nicht gereinigten Bereiche des zu reinigenden Bereichs gereinigt sind.

9. Verfahren nach Anspruch 7, wobei das Durchführen eines Reinigungsvorgangs in dem zu reinigenden Bereich oder dem zu reinigenden Teilbereich entsprechend einer voreingestellten Reinigungsroute ausgehend von dem ersten Reinigungsstartpunkt Folgendes umfasst:
Verwenden eines Teils eines ungereinigten Bereichs des zu reinigenden Bereichs oder des zu reinigenden Teilbereichs als Zielreinigungsbereich, wenn ein Teil des zu reinigenden Bereichs oder des zu reinigenden Teilbereichs gereinigt worden ist; und, wenn ein Abstand zwischen zwei Kanten des Zielreinigungsbereichs in einer Richtung senkrecht zur Reinigungsrichtung größer ist als ein voreingestellter Abstandswert, Fahren zu einer Kante des Zielreinigungsbereichs ausgehend von dem ersten Reinigungsstartpunkt, und dann Fahren entlang einer ersten Reinigungsroute, um einen Reinigungsvorgang auf einem Boden in dem Zielreinigungsbereich durchzuführen;
wobei die erste Reinigungsroute eine Route ist, die sich schrittweise in der Reinigungsrichtung vorwärts bewegt und sich in einer Richtung senkrecht zur Reinigungsrichtung hin und her dreht.

10. Verfahren nach Anspruch 7, wobei das Durchführen eines Reinigungsvorgangs in dem zu reinigenden Bereich oder dem zu reinigenden Teilbereich entsprechend einer voreingestellten Reinigungsroute ausgehend von dem ersten Reinigungsstartpunkt Folgendes umfasst:
Verwenden eines Teils eines ungereinigten Bereichs des zu reinigenden Bereichs oder des zu reinigenden Teilbereichs als Zielreinigungsbereich, wenn ein Teil des zu reinigenden Bereichs oder des zu reinigenden Teilbereichs gereinigt worden ist; und, wenn ein Abstand zwischen zwei Kanten des Zielreinigungsbereichs in einer Richtung senkrecht zur Reinigungsrichtung kleiner oder gleich einem voreingestellten Abstandswert ist, Fahren zu einer Kante des Zielreinigungsbereichs ausgehend von dem ersten Reinigungsstartpunkt, und dann Fahren entlang einer zweiten Reinigungsroute, um einen Reinigungsvorgang auf einem Boden in dem Zielreinigungsbereich durchzuführen;
wobei die zweite Reinigungsroute eine Route ist, die sich schrittweise in einer Richtung senkrecht zur Reinigungsrichtung vorwärts bewegt und sich in einer Richtung parallel zur Reinigungsrichtung hin und her dreht.

11. Verfahren nach Anspruch 7, wobei das Durchführen eines Reinigungsvorgangs in dem zu reinigenden Bereich oder dem zu reinigenden Teilbereich entsprechend einer voreingestellten Reinigungsroute ausgehend von dem ersten Reinigungsstartpunkt Folgendes umfasst:
wenn ein Hindernis oder ein gereinigter Bereich in dem zu reinigenden Bereich oder dem zu reinigenden Teilbereich vorhanden ist und ein ungereinigter Bereich auf einer Seite in einer der Reinigungsrichtung entgegengesetzten Richtung basierend auf einer Stelle des Hindernisses oder einer aktuellen Stelle des Reinigungsroboters vorhanden ist, Fahren entlang einer Kante des Hindernisses zu einem Endpunkt des Hindernisses ausgehend von dem ersten Reinigungsstartpunkt, oder Fahren entlang einer Kante des gereinigten Bereichs zu einem Endpunkt des gereinigten Bereichs ausgehend von dem ersten Reinigungsstartpunkt; und
Durchführen des Reinigungsvorgangs in dem zu reinigenden Bereich oder dem zu reinigenden Teilbereich entsprechend der voreingestellten Reinigungsroute ausgehend von dem Endpunkt.

12. Verfahren nach einem der Ansprüche 1 bis 4 oder 6 bis 9, wobei das Reinigungssteuerverfahren ferner Folgendes umfasst:
Schritt S301, Beenden der Reinigung, wenn der Reinigungsroboter im Reinigungsprozess auf ein Hindernis auftrifft, und anschließendes Wiederholen von Schritt S2, um einen ersten Reinigungsstartpunkt eines ungereinigten Bereichs basierend auf dem ungereinigten Bereich des zu reinigenden Bereichs oder des zu reinigenden Teilbereichs neu zu bestimmen; und
Schritt S302, Durchführen des Reinigungsvorgangs im ungereinigten Bereich ausgehend von dem neu bestimmten ersten Reinigungsstartpunkt.

13. Verfahren nach einem der Ansprüche 1 bis 4 oder 6 bis 9, wobei das Reinigungssteuerverfahren ferner Folgendes umfasst:
Schritt S311, Bilden eines Kreises um ein Hindernis, wenn der Reinigungsroboter im Reinigungsprozess auf das Hindernis auftrifft, und anschließendes Wiederholen von Schritt S2, um einen ersten Reinigungsstartpunkt eines ungereinigten Bereichs basierend auf dem ungereinigten Bereich des zu reinigenden Bereichs oder des zu reinigenden Teilbereichs neu zu bestimmen; und
Schritt S312, Durchführen des Reinigungsvorgangs im ungereinigten Bereich ausgehend von dem neu bestimmten ersten Reinigungsstartpunkt.

14. Reinigungsroboter, **dadurch gekennzeichnet, dass** er Folgendes umfasst:
einen Prozessor und einen Speicher (107), in dem mindestens eine Anweisung, mindestens ein Programm, ein Codesatz oder ein Anweisungssatz gespeichert ist, wobei die mindestens eine Anweisung, das mindestens eine Programm, der Codesatz oder der Anweisungssatz vom Prozessor geladen und ausgeführt werden kann, um die Schritte des Reinigungssteuerverfahrens nach einem der Ansprüche 1 bis 13 zu implementieren.

15. Computerlesbares Speichermedium, das mindestens eine Anweisung, mindestens ein Programm, einen Codesatz oder einen Anweisungssatz speichert, **dadurch gekennzeichnet, dass** die mindestens eine Anweisung, das mindestens eine Programm, der Codesatz oder der Anweisungssatz von einem Prozessor geladen und ausgeführt werden kann, um die Schritte des Reinigungssteuerverfahrens nach einem der Ansprüche 1 bis 13 zu implementieren.

## Revendications

1. Procédé de commande de nettoyage, applicable à être exécuté par un robot de nettoyage lors de nettoyage d'une zone inconnue à nettoyer, dans lequel le robot de nettoyage est utilisé en combinaison avec une station de base, la station de base est un appareil de nettoyage utilisé par le robot de nettoyage, la zone à nettoyer comprend un bord d'entrée, le robot de nettoyage est configuré pour effectuer une opération de nettoyage selon une direction de nettoyage définie, et la direction de nettoyage définie est une direction orientée de l'intérieur de la zone à nettoyer vers le bord d'entrée, et **caractérisé en ce que** le procédé de commande de nettoyage comprend :
opération S1, acquérir une carte de zone, dans laquelle la carte de zone est configurée pour représenter la zone à nettoyer ou une sous-zone à nettoyer dans la zone à nettoyer, et la sous-zone à nettoyer est une zone non nettoyée dans la zone à nettoyer ;
opération S2, déterminer un premier point de départ de nettoyage de la zone à nettoyer ou de la sous-zone à nettoyer sur la base de la carte de zone, dans laquelle le premier point de départ de nettoyage est un point situé sur un bord de la zone à nettoyer ou de la sous-zone à nettoyer à l'opposé de la direction de nettoyage ; et
opération S3, effectuer une opération de nettoyage sur la zone à nettoyer ou la sous-zone à nettoyer à partir du premier point de départ de nettoyage, après s'être déplacé vers le premier point de départ de nettoyage.

2. Procédé selon la revendication 1, dans lequel l'opération S2 : déterminer un premier point de départ de nettoyage de la zone à nettoyer ou de la sous-zone à nettoyer sur la base de la carte de zone, comprend :
opération S21, rechercher un premier point non nettoyé le plus proche d'une position actuelle du robot de nettoyage dans la zone à nettoyer sur la base de la carte de zone ;
opération S22, rechercher un second point non nettoyé de la zone à nettoyer ou de la sous-zone à nettoyer dans une direction opposée à la direction de nettoyage dans une plage d'une longueur prédéfinie perpendiculaire à la direction de nettoyage dans la zone à nettoyer, dans laquelle le second point non nettoyé est un point non nettoyé le plus éloigné du premier point non nettoyé dans la direction de nettoyage ; et
opération S23, déterminer le premier point de départ de nettoyage de la zone à nettoyer ou de la sous-zone à nettoyer sur la base du second point non nettoyé.

3. Procédé selon la revendication 1, dans lequel l'opération S2 : déterminer un premier point de départ de nettoyage de la zone à nettoyer ou de la sous-zone à nettoyer sur la base de la carte de zone, comprend :
opération S201, sur la base de la carte de zone, dans la zone à nettoyer ou la sous-zone à nettoyer, commencer à partir d'une position actuelle du robot de nettoyage, et balayer la zone à nettoyer ou la sous-zone à nettoyer dans une direction opposée à la direction de nettoyage sous forme de lignes de balayage pour rechercher un premier point non nettoyé, dans laquelle les lignes de balayage sont perpendiculaires à la direction de nettoyage, et le premier point non nettoyé est un point non nettoyé le plus éloigné de la position actuelle dans la direction de nettoyage ; et
opération S202, déterminer le premier point de départ de nettoyage de la zone à nettoyer ou de la sous-zone à nettoyer sur la base du premier point non nettoyé.

4. Procédé selon la revendication 1, dans lequel l'opération S2 : déterminer un premier point de départ de nettoyage de la zone à nettoyer ou de la sous-zone à nettoyer sur la base de la carte de zone, comprend :
opération S211, sur la base de la carte de zone, dans la zone à nettoyer ou la sous-zone à nettoyer, prendre un bord d'entrée de la zone à nettoyer ou de la sous-zone à nettoyer comme position de départ du robot de nettoyage, et rechercher un premier point non nettoyé de la zone à nettoyer ou de la sous-zone à nettoyer dans une direction opposée à la direction de nettoyage, dans laquelle le premier point non nettoyé est un point non nettoyé le plus éloigné de la position de départ dans la direction de nettoyage ; et
opération S212, déterminer le premier point de départ de nettoyage de la zone à nettoyer ou de la sous-zone à nettoyer sur la base du premier point non nettoyé.

5. Procédé selon l'une quelconque des revendications 3 à 4, dans lequel l'opération de déterminer le premier point de départ de nettoyage de la zone à nettoyer ou de la sous-zone à nettoyer sur la base du premier point non nettoyé, comprend :
prendre le premier point non nettoyé comme premier point de départ de nettoyage de la zone à nettoyer ou de la sous-zone à nettoyer ; ou
lorsqu'un point non nettoyé existe sur un bord où se trouve le premier point non nettoyé, se déplacer vers un point d'extrémité du bord et prendre le point d'extrémité du bord comme premier point de départ de nettoyage de la zone à nettoyer ou de la sous-zone à nettoyer.

6. Procédé selon la revendication 2, dans lequel l'opération S23 : déterminer le premier point de départ de nettoyage de la zone à nettoyer ou de la sous-zone à nettoyer sur la base du second point non nettoyé, comprend :
prendre le second point non nettoyé comme premier point de départ de nettoyage de la zone à nettoyer ou de la sous-zone à nettoyer ; ou
lorsqu'un point non nettoyé existe sur un bord où se trouve le second point non nettoyé, se déplacer vers un point d'extrémité du bord et prendre le point d'extrémité du bord comme premier point de départ de nettoyage de la zone à nettoyer ou de la sous-zone à nettoyer.

7. Procédé selon la revendication 1, dans lequel l'opération S3 : effectuer une opération de nettoyage sur la zone à nettoyer ou la sous-zone à nettoyer à partir du premier point de départ de nettoyage, comprend :
effectuer l'opération de nettoyage sur la zone à nettoyer ou la sous-zone à nettoyer selon un chemin de nettoyage prédéfini à partir du premier point de départ de nettoyage.

8. Procédé selon la revendication 7, dans lequel, après l'opération S3, le procédé comprend en outre :
opération S4, juger si le chemin de nettoyage prédéfini est terminé, dans laquelle l'opération de juger si le chemin de nettoyage prédéfini est terminé comprend : un obstacle étant rencontré, ou une puissance du robot de nettoyage atteignant une valeur de seuil et le robot de nettoyage devant retourner à la station de base pour recharger, ou le robot de nettoyage devant retourner à la station de base pour nettoyer un composant de nettoyage ; et
opération S5, lorsque le chemin de nettoyage prédéfini est terminé, sur la base de la carte de zone, rechercher à nouveau un premier point de départ de nettoyage de la zone à nettoyer ou de la sous-zone à nettoyer, effectuer une opération de nettoyage sur la zone à nettoyer ou la sous-zone à nettoyer selon un chemin de nettoyage prédéfini à partir du premier point de départ de nettoyage recherché à nouveau jusqu'à ce que toutes les zones non nettoyées de la zone à nettoyer soient nettoyées.

9. Procédé selon la revendication 7, dans lequel l'opération d'effectuer l'opération de nettoyage sur la zone à nettoyer ou la sous-zone à nettoyer selon un chemin de nettoyage prédéfini à partir du premier point de départ de nettoyage, comprend :
prendre une partie d'une zone non nettoyée de la zone à nettoyer ou de la sous-zone à nettoyer comme zone de nettoyage cible lorsqu'une partie de la zone à nettoyer ou de la sous-zone à nettoyer a été nettoyée et qu'une distance entre deux bords de la zone de nettoyage cible dans une direction perpendiculaire à la direction de nettoyage est supérieure à une valeur de distance prédéfinie, se déplacer vers un bord de la zone de nettoyage cible à partir du premier point de départ de nettoyage, puis se déplacer le long d'un premier chemin de nettoyage pour effectuer une opération de nettoyage sur un sol de la zone de nettoyage cible ;
dans lequel le premier chemin de nettoyage est un chemin avançant progressivement dans la direction de nettoyage et tournant d'avant en arrière dans une direction perpendiculaire à la direction de nettoyage.

10. Procédé selon la revendication 7, dans lequel l'opération d'effectuer l'opération de nettoyage sur la zone à nettoyer ou la sous-zone à nettoyer selon un chemin de nettoyage prédéfini à partir du premier point de départ de nettoyage, comprend :
prendre une partie d'une zone non nettoyée de la zone à nettoyer ou de la sous-zone à nettoyer comme zone de nettoyage cible lorsqu'une partie de la zone à nettoyer ou de la sous-zone à nettoyer a été nettoyée et qu'une distance entre deux bords de la zone de nettoyage cible dans une direction perpendiculaire à la direction de nettoyage est inférieure ou égale à une valeur de distance prédéfinie, se déplacer vers un bord de la zone de nettoyage cible à partir du premier point de départ de nettoyage, puis se déplacer le long d'un second chemin de nettoyage pour effectuer une opération de nettoyage sur un sol de la zone de nettoyage cible ;
dans lequel le second chemin de nettoyage est un chemin avançant progressivement dans une direction perpendiculaire à la direction de nettoyage et tournant d'avant en arrière dans une direction parallèle à la direction de nettoyage.

11. Procédé selon la revendication 7, dans lequel l'opération d'effectuer l'opération de nettoyage sur la zone à nettoyer ou la sous-zone à nettoyer selon un chemin de nettoyage prédéfini à partir du premier point de départ de nettoyage, comprend :
lorsqu'un obstacle ou une zone nettoyée existe dans la zone à nettoyer ou la sous-zone à nettoyer, et qu'une zone non nettoyée existe sur un côté dans une direction opposée à la direction de nettoyage sur la base d'un emplacement de l'obstacle ou d'un emplacement actuel du robot de nettoyage, se déplacer le long d'un bord de l'obstacle jusqu'à un point final de l'obstacle à partir du premier point de départ de nettoyage, ou se déplacer le long d'un bord de la zone nettoyée jusqu'à un point final de la zone nettoyée à partir du premier point de départ de nettoyage ; et
effectuer l'opération de nettoyage sur la zone à nettoyer ou la sous-zone à nettoyer selon un chemin de nettoyage prédéfini à partir du point final.

12. Procédé selon l'une quelconque des revendications 1 à 4 ou 6 à 9, dans lequel le procédé de commande de nettoyage comprend en outre :
opération S301, arrêter le nettoyage lorsque le robot de nettoyage rencontre un obstacle au cours du nettoyage, puis répéter l'opération S2 pour déterminer à nouveau un premier point de départ de nettoyage d'une zone non nettoyée sur la base de la zone non nettoyée de la zone à nettoyer ou de la sous-zone à nettoyer ; et
opération S302, effectuer l'opération de nettoyage sur la zone non nettoyée à partir du premier point de départ de nettoyage déterminé à nouveau.

13. Procédé selon l'une quelconque des revendications 1 à 4 ou 6 à 9, dans lequel le procédé de commande de nettoyage comprend en outre :
opération S311, faire un cercle autour d'un obstacle lorsque le robot de nettoyage rencontre l'obstacle au cours du nettoyage, puis répéter l'opération S2 pour déterminer à nouveau un premier point de départ de nettoyage d'une zone non nettoyée sur la base de la zone non nettoyée de la zone à nettoyer ou de la sous-zone à nettoyer ; et
opération S312, effectuer l'opération de nettoyage sur la zone non nettoyée à partir du premier point de départ de nettoyage déterminé à nouveau.

14. Robot de nettoyage, **caractérisé en ce qu'**il comprend :
un processeur et une mémoire (107) dans lequel est stocké au moins une instruction, au moins un programme, un ensemble de codes ou un ensemble d'instructions, l'au moins une instruction, l'au moins un programme, l'ensemble de codes ou l'ensemble d'instructions pouvant être chargé et exécuté par le processeur pour mettre en œuvre les opérations du procédé de commande de nettoyage selon l'une quelconque des revendications 1 à 13.

15. Support de stockage lisible par ordinateur, stockant au moins une instruction, au moins un programme, un ensemble de codes ou un ensemble d'instructions, **caractérisé en ce que** l'au moins une instruction, l'au moins un programme, l'ensemble de codes ou l'ensemble d'instructions pouvant être chargé et exécuté par un processeur pour mettre en œuvre les opérations du procédé de commande de nettoyage selon l'une quelconque des revendications 1 à 13.
